(19) **Europäisches Patentamt**
**European Patent Office**
**Office européen des brevets**

(11) **EP 3 268 415 B1**

(12) **EUROPEAN PATENT SPECIFICATION**

(45) Date of publication and mention
of the grant of the patent:
**07.11.2018 Bulletin 2018/45**

(21) Application number: **16711180.6**

(22) Date of filing: **11.03.2016**

(51) Int Cl.:
*C08J 3/22* (2006.01)  *C08J 5/00* (2006.01)
*C08K 3/00* (2018.01)  *C08K 3/04* (2006.01)
*C08L 23/04* (2006.01)  *C08L 23/06* (2006.01)
*C08L 25/04* (2006.01)  *H01B 1/24* (2006.01)
*B29C 45/00* (2006.01)  *B29C 47/00* (2006.01)
*B29K 105/16* (2006.01)  *B29K 507/04* (2006.01)

(86) International application number:
**PCT/EP2016/055379**

(87) International publication number:
**WO 2016/142545 (15.09.2016 Gazette 2016/37)**

(54) **PROCESS FOR THE PREPARATION OF COMPOSITE ARTICLES HAVING ENHANCED ELECTRICAL PROPERTIES**

VERFAHREN ZUR HERSTELLUNG EINES VERBUNDARTIKELS MIT VERBESSERTEN ELEKTRISCHEN EIGENSCHAFTEN

PROCÉDÉ POUR LA PRÉPARATION D'UN ARTICLE COMPOSITE AYANT DES PROPRIÉTÉS ÉLECTRIQUES AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2015 EP 15158861**

(43) Date of publication of application:
**17.01.2018 Bulletin 2018/03**

(73) Proprietor: **Total Research & Technology Feluy**
**7181 Seneffe (BE)**

(72) Inventors:
• **ROUSSEAUX, Dimitri**
**1400 Nivelles (BE)**

• **VAES, Geert**
**3061 Leefdaal (BE)**
• **BOUKALIDIS, Cristo**
**7332 Sirault (BE)**

(74) Representative: **Garcia Martin, Margarita**
**Total Research & Technology Feluy**
**Patent Department**
**Zone Industrielle Feluy C**
**7181 Seneffe (BE)**

(56) References cited:
**EP-A1- 2 028 218      WO-A1-2013/107535**
**WO-A1-2015/014897     KR-A- 20090 095 766**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The present invention relates to a process for the preparation of composite articles comprising carbon particles such as carbon nanotubes or graphene. In particular, the process relates to the preparation of shaped composite articles. The present invention also relates to the shaped composite articles produced therefrom.

**Background of the invention**

As electronic devices become smaller and faster, their sensitivity to electrostatic charges is increased and electronic packaging has been provided to improve electrostatically dissipative properties. Electronics packaging is designed to prevent the build-up of static electrical charges and the consecutive electrostatic discharge (ESD) which can be responsible of serious damages to sensitive electronics and result in product defects and high scrap rates.

In order to ensure ESD protection, inherently electrically insulating polymers may be rendered conductive or dissipative by incorporating conductive fillers -such as carbon black (CB)- allowing effective dissipation of static electrical charges.

Currently conductive or dissipative plastics are dominated by CB, mainly because CB is relatively cheap in comparison to other conductive fillers, such as carbon fiber, carbon nanotubes (CNT), metal fiber, metal-coated carbon fiber, and metal powder. Addition level of CB must be sufficient so that particles create a conductive pathway through the materials. In consequence, high levels of CB (15-30 %) are required to meet the requirements, which alter critical physical properties of the basic polymer such as impact strength, elongation and compound viscosity.

These properties need to be preserved when using other fillers instead of CB as conductive fillers. Nevertheless, a minimum concentration is required to obtain the desired conductivity. Since other fillers are more expensive than CB, there remains a need to provide improved conductive compositions which are electrically insulating and remain costly attractive.

Conductive compositions containing CNT are known. Production of polymer-CNT composites can be done by physically mixing the polymer powder and the CNT for example by shear mixing techniques or by grinding. However a disadvantage of these methods is that the CNT are not well dispersed in the polymer which finally impacts the electrical properties of the conductive compositions.

It is known from WO2015/014897 masterbatches for preparing conductive composites materials comprising carbon nanotubes and produced from amorphous polymers such as polystyrene. The document also discloses composite material obtained by blending said masterbatches and a second amorphous polymer, as well as the use of the composite material in a process selected from blow-moulding, injection, rotomoulding of injection blow-moulding.

KR2009 0095766 discloses a three steps method for manufacturing carbon nanotube-polymer nanocomposites. The resin composition obtained may be used in injection or other shaping processes.

EP2028218 a process for preparing a resin composition comprising blending carbon nanotubes with poly(hydroxyl carboxylic acid) to form a composite and then blending the composite with a polyolefin to form the composition. This document discloses the use of poly(hydroxyl carboxylic acid) as compatibiliser to blend carbon nanotubes into polyolefins. The composition may be subsequently used in injection, extrusion or other shaping processes.

WO2013/107535 discloses a composition comprising carbon nanotubes and the process to prepare said composition.

**Summary of the invention**

It is therefore an object of the present invention to provide a process for the preparation of composite articles having enhanced electrical properties at low carbon particles, such as graphene or carbon nanotubes content. It is also an object of the invention to provide a process that is cost effective.

In a first aspect of the present invention, a process for the preparation of a shaped composite article is provided. Hence, the first aspect relates to a process for the preparation of a shaped composite article comprising a polymer composition and carbon particles being carbon nanotubes or graphene, said polymer composition comprising a mixture of a first polymer and a second polymer, and the composite article comprises from 0.01 to 4 % by weight of carbon particles based on the total weight of the composite article as determined according to ISO 11358, characterized in that said process comprises the steps of:

(a) providing a masterbatch comprising the first polymer and at least 5% of carbon particles by weight of the masterbatch as determined according to ISO 11358,
(b) providing the second polymer, and

(c) blending and shaping, in the same step, the masterbatch and the second polymer in a single extrusion or injection moulding device to form said shaped composite article.

It was surprisingly observed that the present process allows the preparation of shaped composite article or shaped article having at least enhanced electrical properties compared to a process for the preparation of shaped article wherein the blending of the masterbatch with a second polymer and the shaping of the composite article are carried out via an intermediate compounding step.

It is common in the art to prepare a shaped composite article by providing a masterbatch comprising the first polymer and carbon particles, providing the second polymer, and blending the masterbatch and the second polymer to form a compounded polymer composition in a first extruder. The compounded polymer composition is subsequently cooled, reduced into pellets and conveyed to another machine where the compounded polymer composition is shaped to provide the desired shaped composite article or article.

It has been observed that by simultaneously blending and shaping the masterbatch and the second polymer, i.e. in the same extruder, the shaped composite article has enhanced surface resistivity. Furthermore, by avoiding intermediary step such as the compounding step, the present process provides economical interest.

In a preferred embodiment, the shaped composite article is an extrudate and said extrudate is not chopped into pellets. The shaped composite article can be a film, sheet, wire, fibre bundle, or profile.

In a preferred embodiment, the masterbatch has a surface resistivity of less than $10^3$ Ohm/sq as measured on compression molded plaques from pellets according to ASTM D257-07. In a preferred embodiment, the first and second polymers are either:

- amorphous polymers independently selected from the group consisting polystyrene, acrylonitrile-butadiene- styrene, polycarbonate, styrene acrylonitrile, poly(methylmethacrylate), polyvinylchloride, polybutadiene, polybutylene terephthalate, poly(p-phenyleneoxide), polysulfone, polyethersulfone, polyethylenimine, polyphenylsulfone, acrylonitrile styrene acrylate or any combination thereof; with preference at least one of the first or second amorphous polymer is polystyrene, said polystyrene being selected from polystyrene, modified polystyrene, or combination of polystyrene and modified polystyrene, or

- semi-crystalline polymers independently selected from the group consisting of polyethylene, syndiotactic or isotactic polypropylene, polylactic acid, polyamide, ethyl-vinyl acetate homopolymer or copolymer, polyurethane, copolymer of ethylene with $C_3$-$C_{10}$ olefins, copolymer of propylene with ethylene or $C_4$-$C_{10}$ olefins, impact copolymer of propylene, polyetheretherketone, polyoxymethylene, syndiotactic polystyrene (SPS), polyphenylene sulfide (PPS), liquid crystalline polymer (LCP), homo- and copolymer of butene, homo- and copolymer of hexene; preferably the first and second semi-crystalline polymer are independently selected from polyethylene, syndiotactic or isotactic polypropylene, polylactic acid, copolymer of ethylene with $C_3$-$C_{10}$ olefins, copolymer of propylene with ethylene or $C_4$-$C_{10}$ olefins, impact copolymer of propylene .

Preferably, the first and second polymers are amorphous, and the masterbatch comprises a blend of the first polymer with at least 5%, preferably from 5 % to 25 %, more preferably from 5% to 15%, by weight of carbon nanotubes or graphene based on the total weight of the masterbatch as determined according to ISO 11358, said masterbatch having a high load melt flow index HLMI of less than 40 g/10 min determined at 200 °C under a load of 21.6 kg according to ISO 1133.

With preference the first and second polymers are amorphous, and the masterbatch comprises a blend of the first polymer with at least 5%, preferably from 7 % to 15 %, more preferably from 5% to 15%, by weight of carbon nanotubes or graphene based on the total weight of the masterbatch as determined according to ISO 11358, said masterbatch having a high load melt flow index HLMI of less than 40 g/10 min determined at 200 °C under a load of 21.6 kg according to ISO 1133 and wherein the first amorphous polymer has a melt flow of at least 1 g/10 min determined a 200 °C under a load of 5 kg according to ISO 1133:2005 procedure B condition H.

In a preferred embodiment, the first and second polymers are amorphous and the masterbatch comprises from 0.01 to 4.0 wt% of one or more additives based on the total weight of the masterbatch, said one or more additives being selected from waxes, tristearin, zinc stearate, calcium stearate, magnesium stearate, erucyl amide, oleic acid amide, ethylene-acrylic acid copolymer, ethylene vinyl acetate copolymer and cetyl trimethyl ammonium bromide.

Preferably, the first and second polymers are amorphous; and the masterbatch and the second amorphous polymer are blended and shaped together in a single step by extrusion in an extruder at a barrel temperature ranging from Tg2 + 100 °C to Tg2 + 200 °C, preferably ranging from Tg2 + 120 °C to Tg2 + 180 °C, wherein Tg2 is the glass transition temperature of the second polymer.

Alternatively, the first and second polymers are semi-crystalline and the masterbatch comprises a blend of the first polymer with at least 5 wt% of carbon nanotubes or graphene, preferably from 5 wt% to 25 wt%, more preferably from 5 wt% to 15 wt% based on the total weight of the masterbatch as determined according to ISO 11358, said masterbatch having a high load melt flow index HLMI of from 2 to 1000 g/10min, preferably ranging from 10 to 1000 g/10 min determined under a load of 21.6 kg according to ISO 1133.

With preference, the first and second polymers are semi-crystalline and the masterbatch comprises a blend of the first polymer with at least 5 wt% of carbon nanotubes or graphene, preferably from 5 wt% to 25 wt%, more preferably from 5 wt% to 15 wt% based on the total weight of the masterbatch as determined according to ISO 11358, said masterbatch having a high load melt flow index HLMI of from 2 to 1000 g/10 min, preferably ranging from 10 to 1000 g/10 min determined under a load of 21.6 kg according to ISO 1133, and wherein the first semi-crystalline polymer has a melt flow index MFI ranging from 5 to 250 g/10 min measured according to ISO 1133 under a load of 2.16 kg.

In a preferred embodiment, the first and second polymers are semi-crystalline and the masterbatch comprises from 0.01 to 4.0 wt% of one or more additives based on the total weight of the masterbatch, said one or more additives being selected from waxes, tristearin, zinc stearate, calcium stearate, magnesium stearate, erucyl amide, oleic acid amide, ethylene-acrylic acid copolymer, ethylene vinyl acetate copolymer and cetyl trimethyl ammonium bromide.

Preferably, the first polymer is semi-crystalline with a melting temperature, $T_{m1}$ measured according to ISO 11357-3:2013; and the masterbatch is produced by blending said first polymer with at least 5 % of carbon particles in an extruder comprising a transport zone and a melting zone maintained at a temperature comprised between $T_{m1} + 1$ °C and $T_{m1} + 50$ °C, preferably between $T_{m1} + 5$ °C and $T_{m1} + 30$ °C.

In a preferred embodiment, the melt flow index of the first polymer is higher than the one of the second polymer, preferably the melt flow index of the first polymer is at least twice of the one of the second polymer.

Preferably, the shaped composite article formed at step (c) has a surface resistivity, determined according to IEC 61340-2-3:2000 on sheets or determined according to ASTM D-257-07 on compression molded plaque, lower than $10^7$ Ohm/sq, preferably lower than $10^5$ Ohm/sq and more preferably lower than $10^4$ Ohm/sq.

In an embodiment, the shaped composite article have an agglomerate area fraction U% lower than 2.5% as determined in accordance with ASTM D2663-14, preferably lower than 2%, more preferably lower than 1.5%, most preferably lower than 1%. Preferably, the percentage of carbon nanotubes having a length greater than 1500 nm in the shaped composite article is greater than 3%, preferably greater than 5% based on the total amount of carbon nanotubes in said shaped composite article.

In an embodiment of the invention, the composite article is a blow-moulded container obtained either,

- by injection blow moulding the container in step (c), or
- by forming a preform in step (c), followed by a separate step of blow-moulding said preform to form the container.

Preferably step (c) of the present process is carried out in a twin-screw extruder with a screws rotation speed comprised between 25 and 300 rpm.

In a second aspect, the present invention relates to a shaped composite article obtained by the process according to the present invention wherein,

- the first polymer is polystyrene, the second polymer is high impact polystyrene and said article is a sheet and has a surface resistivity lower than $5.10^3$ Ohm/sq measured according to IEC 61340-2-3:2000 at a content of carbon nanotubes of 1.0 wt% based on the total weight of the shaped composite article as determined according to ISO 11358; or
- the first polymer is polystyrene and the second polymer is high impact polystyrene and said article is a sheet and has a surface resistivity lower than $3.10^4$ ohm/sq measured according to IEC 61340-2-3:2000 at a carbon nanotubes content of 1.25 wt% based on the total weight of the shaped composite article as determined according to ISO 11358; or
- the first polymer is polystyrene and the second polymer is high impact polystyrene and said article is an injection moulded article and has a surface resistivity lower than $5.10^5$ ohm/sq measured according to ASTM D257-07 at a carbon nanotubes content of 2.0 wt% based on the total weight of the shaped composite article as determined according to ISO 11358; or
- the first and second polymers are polyethylene, and said article is a sheet and has a surface resistivity lower than $6*10^6$ ohm/sq measured according to IEC 61340-2-3:2000 at a carbon nanotubes content of 1*5 wt% based on the total weight of the shaped composite article as determined according to ISO 11358; or
- the first and second polymers are polyethylene, and said article is a sheet and has a surface resistivity lower than $1*10^6$ ohm/sq measured according to IEC 61340-2-3:2000 at a carbon nanotubes content of 2.0 wt% based on the total weight of the shaped composite article as determined according to ISO 11358.

In a preferred embodiment, the step (c) of the present process was carried out by dry blending and shaping the masterbatch and the second polymer by extrusion or injection moulding to form the shaped composite article.

## Detailed description of the invention

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

As used herein, the singular forms "a", "an", and "the" include both singular and plural referents unless the context clearly dictates otherwise. By way of example, "a polyethylene" means one polyethylene or more than one polyethylene.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

All references cited in the present specification are hereby incorporated by reference in their entirety. In particular, the teachings of all references herein specifically referred to are incorporated by reference.

As used herein, the term "masterbatch" refers to concentrates of active material (such as the carbon nanotubes (CNT)) in a polymer, which are intended to be subsequently incorporated into another polymer miscible with the polymer already contained in the masterbatches. Use of masterbatches makes processes more easily adaptable to industrial scale, compared to direct incorporation of CNT powder.

As used herein, the term "miscible" refers to the ability of two polymers to form a single polymeric phase. The term "miscible" is defined herein according to the definition recognized by I.U.P.A.C. which states that two polymers are miscible when

$$\left(\frac{\partial^2 \Delta_{mix}G}{\partial \phi^2}\right) T, p > 0,$$

wherein $\Delta_{mix}G$ is the Gibbs energy of mixing and $\phi$ the composition, where $\phi$ is the volume fraction of one of the components determined at its melting temperature (Tm) and under atmospheric pressure.

In accordance with the invention, two polymers are said miscible when they are of the same nature, for instance when both are polyethylene. Two polymers of different nature are in general not miscible with some exception such as for example polypropylene and polybutene.

In a first aspect of the present invention, a process for the preparation of a shaped composite article comprising a polymer composition and carbon particles being carbon nanotubes or graphene is provided. Preferably, the carbon particles are carbon nanotubes. The composite article prepared according to the present process comprises from 0.01 to 4 % by weight of carbon particles based on the total weight of the composite article as determined according to ISO 11358, preferably the composite article comprises from 0.05 to 3 wt% of carbon particles, more preferably from 0.1 to 2.5 wt% of carbon particles, and most preferably from 0.5 to 2 wt% of carbon particles based on the total weight of the composite article as determined according to ISO 11358.

Said polymer composition comprises a mixture of a first polymer and a second polymer. Preferably, said first polymer and said second polymer are miscible.

The present process comprises the steps of:

(a) providing a masterbatch comprising the first polymer and at least 5 % of carbon particles by weight of the masterbatch as determined according to ISO 11358,
(b) providing the second polymer, and
(c) blending and shaping, in the same step, the masterbatch and the second polymer in a single extrusion or injection moulding device to form said shaped composite article.

Preferably, the masterbatch comprises at least 5 % by weight of carbon particles, preferably of carbon nanotubes or graphene, based on the total weight of the masterbatch as determined according to ISO 11358. Preferably the masterbatch comprises at least 8% by weight of carbon particles, preferably of carbon nanotubes or graphene, based on the total weight of the masterbatch. Preferably the masterbatch comprises at least 10% by weight of carbon particles, preferably of carbon nanotubes or graphene, based on the total weight of the masterbatch as determined according to ISO 11358.

Preferably, the masterbatch comprises at most 25% by weight of carbon particles, preferably of carbon nanotubes or graphene, based on the total weight of the masterbatch as determined according to ISO 11358. Preferably the masterbatch comprises at most 20% by weight of carbon particles, preferably of carbon nanotubes or graphene, more preferably at most 15% by weight of carbon particles, preferably of carbon nanotubes or graphene, based on the total weight of the masterbatch as determined according to ISO 11358.

In particular, the masterbatch comprises from 5% to 25%, preferably from 5% to 15% by weight of carbon particles, preferably carbon nanotubes or graphene, based on the total weight of the masterbatch as determined according to ISO 11358.

In a preferred embodiment, the melt flow index of the first polymer may be at least 0.01 g/10 min, preferably at least 0.1 g/10 min, more preferably at least 1 g/10 min, most preferably at least 10 g/10 min. In a preferred embodiment, the melt flow index of the first polymer may be at most 2000 g/10 min, preferably at most 1500 g/10 min, more preferably at most 1000 g/10 min, most preferably at most 500 g/10 min, in particular at most 200 g/10 min determined according to ISO 1133.

Preferably, the masterbatch comprises from 0.01 to 4.0 wt% of one or more additives based on the total weight of the masterbatch, said one or more additives being selected from waxes, tristearin, zinc stearate, calcium stearate, magnesium stearate, erucyl amide, oleic acid amide, ethylene-acrylic acid copolymer, ethylene vinyl acetate copolymer and cetyl trimethyl ammonium bromide.

In a preferred embodiment, the first polymer and the second polymer are both amorphous polymers or both semi-crystalline polymers.

Amorphous polymer

In a preferred embodiment, the first polymer and the second polymer are both amorphous polymers.

The term "amorphous polymer" indicates a polymer that, because of its constitution, is unable to crystallize, i.e., a polymer that is not a crystallizable polymer. The glass transition temperature is the reversible transition in amorphous materials from a hard and relatively brittle state into a molten or rubber-like state. The glass transition temperature of an amorphous polymer can be determined by the method according to ISO 11357-2:2013.

Preferably, the first polymer and the second polymer are amorphous and are independently selected from the group consisting polystyrene, acrylonitrile-butadiene-styrene, polycarbonate, styrene acrylonitrile, poly(methyl methacrylate), polyvinyl chloride), polybutadiene, polybutylene terephthalate, poly(p-phenylene oxide), polysulfone, polyethersulfone, polyethylenimine, polyphenylsulfone, acrylonitrile styrene acrylate or any combination thereof; with preference at least one of the first or second amorphous polymer is polystyrene, said polystyrene being selected from polystyrene, modified polystyrene, or combination of polystyrene and modified polystyrene.

In a preferred embodiment the first amorphous polymer is polystyrene, modified polystyrene or a mixture of polystyrene and modified polystyrene, with preference the first amorphous polymer is polystyrene, for example general-purpose polystyrene (GPPS).

The melt flow index MFI of the first amorphous polymer is at least 0.5 g/10 min as as determined according to ISO 1133, preferably at least 1g/ 10 min, more preferably at least 10 g/10 min, even more preferably at least 15 g/10 min, most preferably at least 18 g/10 min, even most preferably at least 20 g/10 min, and in particular at least 25 g/10 min. In an embodiment, the melt flow index of the first amorphous polymer MFI is at most 300 g/10 min, preferably at most 100 g/10 min, more preferably 60 g/10 min, most preferably 40 g/10 min. When the first amorphous polymer is polystyrene, the MFI is determined at 200°C under a load of 5 kg, in accordance with ISO 1133.

Preferably, the masterbatch may comprise a blend of a first amorphous polymer with carbon nanotubes, at least 5%, preferably from 5% to 25%, more preferably from 5 % to 15 %, by weight of carbon nanotubes based on the total weight of the masterbatch as determined according to ISO11358, and having a high load melt flow index HLMI of less than 40 g/10 min determined at 200 °C under a load of 21.6 kg according to ISO 1133. Preferably, the first amorphous polymer has a melt flow index MFI of at least 0.5 g/10 min, preferably at least 1 g/10 min, more preferably at least 10 g/10 min as determined at 200 °C under a load of 5 kg according to ISO 1133.

In an embodiment of the invention, the masterbach comprising amorphous polymer and carbon nanotube is prepared in accordance to the process described in WO2015/014897.

In another embodiment, the masterbach comprising amorphous polymer and carbon nanotube is prepared in accordance to the process described in WO2015/014897 with the difference that the first amorphous polymer has a melt flow of at least 5 g/10 min as determined in accordance with ISO 1133 and that the barrel temperature is higher.

Thus, in a preferred embodiment of the invention, the process for preparing a masterbatch from amorphous polymer comprises the steps of:

a1. providing carbon nanotubes;
a2. providing an first amorphous polymer, said first amorphous polymer having a glass transition temperature Tg1, and a melt flow index MFI1 of at least 5 g/10 min as determined according to IS0 1133 preferably of at least 10 g/10 min, and optionally from 0.01 to 4.0 % by weight of one or more additive based on the total weight of the masterbatch, the one or more additive being selected from waxes, tristearin, zinc stearate, calcium stearate, magnesium stearate, erucyl amide, oleic acid amide, ethylene-acrilyc acid copolymer, ethylene vinyl acetate copolymer and cetyl trimethyl ammonium bromide;

a3. blending together said carbon nanotubes and said first amorphous polymer by extrusion in an extruder at a barrel temperature ranging from Tg1 to Tg1 +120 °C, preferably Tg1 + 5 °C to Tg1 + 50 °C, the glass transition temperature being determined according to ISO 11357-2:2013.

With preference when the MFI of the first polymer is comprised between 5 and 10 g/10 min determined according to ISO 1133, then the barrel temperature in step a3) is comprised between Tg1 to Tg1 +120 °C.

In an embodiment of the invention the MFI of the first polymer is at least 10 g/10 min as determined according to IS01133 and the barrel temperature in step a3) is comprised between Tg1 to Tg1 +80°C.

With preference, the step a3) of blending together said carbon nanotubes and said first amorphous polymer by extrusion is conducted on co-rotating twin screw extruder at a screw speed of at least 250 rpm, with preference at least 300 rpm.

The masterbatches prepared by said process are preferred as a good dispersion of the CNT within the polymer is obtained.

In a preferred embodiment, the masterbatch comprises at most 15 %, preferably 13 % by weight of carbon nanotubes based on the total weight of the masterbatch as determined according to ISO 11358 and has a surface resistivity of at most $1*10^7$ Ohm/sq as measured on compression molded plaques from pellets according to ASTM D257-07; preferably the masterbatch comprises at most 11 % by weight of carbon nanotubes based on the total weight of the masterbatch as determined according to ISO 11358 and has a surface resistivity of at most $1*10^4$ Ohm/sq, preferably of at most $5*10^3$ ohm/sq as measured on compression molded plaques from pellets according to ASTM D257-07.

It is noted, that if necessary, in order to determine its MFI, the first amorphous polymer being PS may be extracted from the masterbatch using the following method:

1) Weigh a quantity of sample, taking into account all the additives, to finally obtain the amount needed by the various analyzes requested on pure PS (to determine MFI, weigh about 7 g).

2) Dissolve the sample in a volume of Tetrahydrofuran (THF) (with excess of Butylated hydroxytoluene (BHT)) corresponding to a solution of $\pm$ 1 % (used a white bottle of sufficient volume to contain THF).

3) Turn on the shaker table used to GPC_BT ($\pm$ 50 rpm) for at least one night.

4) Use equipment vacuum filtration THF.

5) Then, filtered on sintered glass covered with a flat polytetrafluoroethylene (PTFE) filter 0.22 $\mu$m.

6) As soon as one realizes that the filtration is exercised almost, change the PTFE filter.

7) When the filtration is complete, rinse 3x bottle containing dissolved pellets.

8) Add a pinch of Aox (1076), corresponding to a few hundred ppm, to the filtered solution.

9) evaporated on a water bath (95 °C) in a large aluminium capsule.

10) Once evaporation is complete, to the capsule in an oven under vacuum at 80 °C for one night or until a completely dry residue.

11) Finally, let cool in a desiccator and determine MFI of pure PS recovered.

However, the person skilled in the art will preferably determine the MFI of the first amorphous polymer before it is blended with carbon nanotubes.

The melt flow index of the second amorphous polymer is not more than 10 g/10 min, preferably not more than 5 g/10 min.

In an embodiment, the first and the second amorphous polymer differs from each other by the polymer-type. For example, one amorphous polymer is polystyrene and the other one is acrylonitrile-butadiene-styrene or styrene acrylonitrile. In another example one amorphous polymer is styrene acrylonitrile and the other one is a mixture of polystyrene and polybutadiene.

In an embodiment, the first and the second amorphous polymer differs from each other by the molecular weight.

In an embodiment, the first and the second amorphous polymer differs from each other by their melt flow index (MFI), the MFI being determined according to ISO 1133.

In a preferred embodiment the first and the second amorphous polymer are of the same polymer type and differ from each other by the molecular weight. In a preferred embodiment of the invention, both the first and the second amorphous polymer are chosen to be polystyrene, one of the first or second polystyrene has a molecular weight ranging from 80 000 to 120 000 g/mol whereas the other one has a molecular weight ranging from 160 000 to 240 000 g/mol as determined by GPC. The polymer composition of the composite article shows bimodality. With preference the first amorphous polymer has the lowest molecular weight.

Non-limiting examples of suitable polystyrenes which can be used in the composition comprise polystyrene (for example General Purpose Polystyrene - GPPS), modified polystyrene (for example High Impact Polystyrene - HIPS), or combination of polystyrene and modified polystyrene. Combination of polystyrene and modified polystyrene is to be understood as any mixture of polystyrene and modified polystyrene.

With preference, at least one of the first or second amorphous polymer is selected from polystyrene, modified polystyrene, or combination of polystyrene and modified polystyrene. In an embodiment both the first and the second amorphous polymer are selected from polystyrene, modified polystyrene, or combination of polystyrene and modified polystyrene. Preferably, in such an embodiment, the first and second amorphous polymers differ by their respective molecular weight and/or by their respective melt flow index.

In the modified-polystyrene, part of the styrene may be replaced by unsaturated monomers copolymerizable with styrene, for example alpha-methylstyrene or (meth)acrylates, Other examples which may be mentioned are chloropolystyrene, poly-alpha-methylstyrene, styrene-chlorostyrene copolymers, styrene-propylene copolymers, styrenebutadiene copolymers, styrene-isoprene copolymers, styrene-vinyl chloride copolymers, styrene-vinyl acetate copolymers, styrene-alkyl acrylate copolymers (methyl, ethyl, butyl, octyl, phenyl acrylate), styrene-alkyl methacrylate copolymers (methyl, ethyl, butyl, phenyl methacrylate), styrene methyl chloroacrylate copolymers and styrene-acrylonitrile-alkyl acrylate copolymers.

The polystyrenes for use in the present invention may be co- or homopolymers of styrene, alpha methyl styrene and para-methyl styrene. Preferably the polystyrene is homopolystyrene.

The polystyrenes may be prepared by a number of methods. This process is well known to those skilled in the art. An example of method to produce polystyrene is given in EP2401311. An example of method to produce high impact polystyrene (HIPS) is given in US2012/0289656.

The modified-polystyrene for use in the composition may be rubber modified.

The rubber may be prepared by a number of methods, preferably by emulsion or solution polymerization. These processes are well known to those skilled in the art.

If present, preferably the rubber is present in an amount from about 3 to 15 % by weight relative to the total weight of the modified-polystyrene. Polybutadiene is a particularly useful rubber.

Preferably the modified-polystyrene is rubber modified polystyrene.

In an embodiment, the rubber modified polystyrene is a High Impact Polystyrene (HIPS). The process for making HIPS is well known to those skilled in the art. For example, the process may comprise polymerizing styrene monomer in the presence of dissolved rubber. Polymerization of styrene, and optionally a comonomer, may be initiated by heating and/or by an initiator, by way of example a radical initiator. The rubber may be "dissolved" in the styrene monomer. The usual rubber types utilized in the manufacture of HIPS include polybutadiene (PBu), styrene-butadiene rubber (SBR), and styrene-butadiene-styrene rubber (SBS). Polystyrene may be initially formed from the styrene monomer within the homogeneous rubber solution in styrene. In HIPS, a part of the styrene may be replaced by unsaturated monomers copolymerizable with styrene such as other monovinylaromatic monomers, alkyl esters of acrylic or methacrylic acid and acrylonitrile. Non-limiting examples of suitable processes for preparing HIPS are described in US2010/240832, incorporated herein by reference.

Advantageously, the modified-polystyrene is a HIPS or a mixture of polystyrene and HIPS.

Preferably, the first and second polymers are amorphous; and the masterbatch and the second amorphous polymer are blended and shaped together by extrusion in a single step in an extruder at a barrel temperature ranging from Tg2+100°C to Tg2+200°C, preferably ranging from Tg2 + 120 °C to Tg2 + 180 °C, wherein Tg2 is the glass transition temperature of the second polymer.

Preferably, when the masterbatch comprises an amorphous first polymer as disclosed above, the second polymer is also amorphous, and the shaped composite article prepared according to the present process comprises from 0.05 to 1.95 % by weight of carbon nanotubes based on the total weight of the composite article, and has a surface resistivity of at most $1*10^6$ Ohm/sq, preferably at most $1*10^5$ Ohm/sq, more preferably at most $1*10^4$ Ohm/sq.

Semi-crystalline polymers

As above-mentioned, the first polymer and the second polymer may be semi-crystalline.

Preferably, the first and second polymer are independently selected from polyethylene, syndiotactic or isotactic polypropylene, polylactic acid, polyamide, ethyl-vinyl acetate, polyurethane, polyetheretherketone, polyoxymethylene, syndiotactic polystyrene (SPS), polyphenylene sulfide (PPS), liquid crystalline polymer (LCP), polybutene, or polyhexene.

Preferably, the first and second polymer are independently selected from:

(a) a homopolymer of polyethylene, a homopolymer of syndiotactic or isotactic polypropylene, a homopolymer of polylactic acid, a homopolymer of polybutene, or a homopolymer of polyhexene, or

(b) a copolymer of ethylene with $C_3$-$C_{10}$ olefins, a copolymer of propylene with ethylene or $C_4$-$C_{10}$ olefins, an impact copolymer of propylene, a copolymer of butene, or a copolymer of hexene.

In a preferred embodiment, the masterbatch comprising the blend of a first semi-crystalline polymer, with carbon nanotubes, the carbon nanotubes content being of at least 5 wt% of carbon nanotubes, preferably from 5 wt% to 25 wt%, more preferably from 5 wt% to 15 wt% based on the total weight of the masterbatch as determined according to ISO 11358, said masterbatch having a HLMI of from 2 g/10 min to 1000 g/10 min, preferably ranging from 10 to 1000 g/10 min under a load of 21.6 kg according to ISO 1133.

In a preferred embodiment, the first polymer has a melt flow index ranging from 5 to 250 g/10 min as measured according to ISO 1133 under a load of 2.16 kg.

The high load melt index of a masterbatch comprising polyethylene as first semi-crystalline polymer ranges from 2 to 1000 g/10 min, preferably from 10 to 1000 g/10 min and more preferably from 10 to 100 g/10 min determined under a load of 21.6 kg according to ISO 1133.

The high load melt index of a masterbatch comprising as first semi-crystalline polymer a polypropylene ranges from 2 to 1000 g/10 min, preferably from 10 to 1000 g/10 min as determined under a load of 21.6 kg according to ISO 1133. The high load melt index of a masterbatch comprising polylactic acid as first semi-crystalline polymer has a HLMI ranging from 1 to 2000 g/10 min as determined under a load of 21.6 kg according to ISO 1133.

In a preferred embodiment, the melt flow index of the second semi-crystalline polymer is greater than 0.5 g/10 min determined under a load of 2.16 kg at the same temperature as that selected for the determination of melt flow index of the first semi-crystalline polymer under a load of 2.16 kg according to ISO 1133; preferably the melt flow index is at most 100 g/10 min, more preferably at most 60 g/10 min.

Preferably, the masterbatch is further characterized in that when the masterbatch is blended with a second polymer in respective proportions to obtain a composite material containing 1 wt.% of carbon nanotubes with respect to the total weight of said composite material as determined according to ISO 11358, said composite material yields:

(a) an agglomerate area fraction U% lower than 2.5%, preferably lower than 2%, more preferably lower than 1%, as determined in accordance with ASTM D2663-14,
(b) a surface resistivity lower than $10^7$ ohms/sq as determined according to IEC 60167, preferably lower than $10^5$ ohm/sq, more preferably lower than $10^4$ ohm/sq as measured on compression molded plaques from pellets according to ASTM D257-07;

wherein said second polymer,

- is miscible with the first polymer,
- has a melting temperature, Tm2, comprised within Tm1 $\pm$ 25 °C, preferably within Tm1 $\pm$ 10 °C, more preferably within Tm1 $\pm$ 5 °C, and

has a melt flow index lower than the melt flow index of the first polymeric composition, preferably of not more than 100 g/10 min as determined under a load of 2.16 kg according to ISO 1133.

In a preferred embodiment of the invention the masterbatch comprises a blend of a first semi-crystalline polymer having a melting temperature Tm1 as measured according to ISO 11357-3:2013, with carbon nanotubes, wherein the carbon nanotubes content being of at least 5 wt% of carbon nanotubes based on the total weight of the masterbatch as determined according to ISO 11358, said masterbatch having a high load melt index HLMI ranging from 2 g/10 min to 1000 g/10 min as determined according to ISO1133 under a load of 21.6 kg;

and is remarkable in that when the masterbatch is blended with a second semi-crystalline polymer in respective proportions to obtain a composite material containing 1 wt.% of carbon nanotubes with respect to the total weight of said composite material as determined according to ISO 11358, said composite material yields:

- an agglomerate area fraction U% lower than 2%, more preferably lower than 1%, as determined in accordance with ASTM D2663-14,
- a surface resistivity lower than $10^5$ ohm/sq, more preferably lower than $10^4$ ohm/sq as determined according to IEC 60167

wherein, the second semi-crystalline polymer is selected to be miscible with the first semi-crystalline polymer, to have a melting temperature Tm2 ranging from Tm1 - 5 °C to Tm1 + 5 °C and to have a melt flow index of not more than 20 g/10 min as determined under a load of 2.16 kg according to ISO 1133.

In a preferred embodiment, the first and second semi-crystalline polymers are polyethylene and could differ or not by their respective melting temperature and by their respective melt flow index. In a preferred embodiment, the polyethylene is selected from the group comprising linear low density polyethylene, low density polyethylene, medium and high density polyethylene. In an embodiment, the polyethylene has a density of 0.890 to 0.975 g/cm$^3$, preferably of from 0.890 to 0.960 g/cm$^3$ with the density being determined with the ISO 1183 standardized test at a temperature of 23 °C. Preferably, the polyethylene is selected from the group comprising linear low density polyethylene (LLDPE), low density polyethylene (LDPE), and high density polyethylene (HDPE).

Alternatively, the first and second semi-crystalline polymers are polypropylene and could differ or not by their respective melting temperature and by their respective melt flow index. Alternatively, the first and second semi-crystalline polymers are polylactic acid and could differ or not by their respective melting temperature and by their respective melt flow index.

The masterbatch may be prepared according to the following steps:

i. providing carbon nanotubes,

ii. providing a first polymer which is semi-crystalline and has a melting temperature, Tm1, measured according to ISO 11357-3:2013, and wherein said first polymer has a melt flow index preferably comprised between 5 and 250 g/10 min as measured according to ISO 1133 under a load of 2.16 kg,

iii. blending together said carbon nanotubes and said first polymeric composition by extrusion in an extruder comprising a transport zone and a melting zone maintained at a temperature comprised between Tm1 + 1°C and Tm1 + 50 °C, preferably between Tm1 + 5 °C and Tm1 + 30 °C, and

iv. forming a masterbatch through a die, said masterbatch,

- comprising at least 5 wt% of carbon nanotubes, preferably from 5 wt% to 25 wt%, more preferably from 5 wt% to 15 wt% based on the total weight of the masterbatch as determined according to ISO 11358, and
- having a high load melt index, HLMI, of from 2 g/10 min to 1000 g/10 min, preferably ranging from 10 to 1000 g/10 min, as determined under a load of 21.6 kg according to ISO 1133.

In a preferred embodiment, the process further comprises the step (i') of adding of from 0.01 to 4.0 wt% of one or more additives based on the total weight of the masterbatch, said one or more additives being selected from waxes, tristearin, zinc stearate, calcium stearate, magnesium stearate, erucyl amide, oleic acid amide, ethylene-acrylic acid copolymer, ethylene vinyl acetate copolymer and cetyl trimethyl ammonium bromide. The addition of the one or more additives according to step (i') can be carried out before step (i) or before step (ii) or before step (iii).

In a preferred embodiment, step (iii) is carried out on co-rotating twin screw extruder at a screw speed of at least 300 rpm.

In a preferred embodiment, the first semi-crystalline polymer is a polyethylene and the temperature within the transport and melting zone of the extruder, preferably over the entire length of the extruder, ranges from 150 °C to 180 °C, preferably from 150 °C to 170 °C, more preferably from 150 °C to 160 °C, and preferably the masterbatch formed has a HLMI preferably ranging from 10 to 100 g/10 min.

Alternatively, the first semi-crystalline polymer is a polypropylene and the temperature within the transport and melting zone of the extruder ranges from 155 °C to 195 °C, preferably from 155° C to 185 °C, more preferably from 155 °C to 175 °C, and preferably the masterbatch formed has a HLMI preferably ranging from 100 to 1000 g/10 min.

Alternatively, the first semi-crystalline polymer is a polylactic acid and the temperature within the transport and melting zone of the extruder ranges from 180 °C to 210 °C, preferably from 182 °C to 195 °C, and the masterbatch formed has a HLMI preferably ranging from 1 to 2000 g/10 min.

In a preferred embodiment, the shaped composite article wherein the first polymer and the second polymer are semi-crystalline may have volatile organic compounds content lower than 100 ppm, preferably lower than 50 ppm as measured according to ISO11890. Furthermore, the shaped composite article may have a surface resistivity lower than $1*10^7$ ohms/sq as determined according to IEC 61340-2-3:2000 on sheets or according to ASTM D257-07, preferably lower than $1*10^6$ ohm/sq, more preferably lower than $1*10^5$ ohm/sq, most preferably lower than $1*10^4$ ohm/sq, in particular lower than $5*10^3$ ohm/sq. The shaped composite article may have a surface resistivity of at least $1*10^2$ ohm/sq, preferably, of at least $5*10^2$ ohm/sq. In a preferred embodiment, the shaped composite article has an agglomerate area fraction U% lower than 2.5%, preferably lower than 2.0%, more preferably lower than 1.5%, even more preferably lower than 1% as determined in accordance with ASTM D2663-14, most preferably lower than 0.9%, even most preferably lower than 0.8%, in particular lower than 0.7%, even more particular lower than 0.6% and even most particular lower than 0.5%.

Carbon particles

As above-mentioned, the carbon particles may be graphene or carbon nanotubes.

Suitable carbon nanotubes used in the present invention can generally be characterized by having a size from 1 nm to 5000 nm, this definition of size can be limited to two dimensions only, i.e. the third may be outside of these limits.

Suitable carbon nanotubes also referred to as "nanotubes" herein, can be cylindrical in shape and structurally related to fullerenes, an example of which is Buckminster fullerene ($C_{60}$). Suitable carbon nanotubes may be open or capped at their ends. The end cap may for example be a Buckminster-type fullerene hemisphere. Suitable carbon nanotubes used in the present invention can comprise more than 90%, more preferably more than 95%, even more preferably more than 99% and most preferably more than 99.9% of their total weight in carbon. However, minor amounts of other atoms may also be present.

Suitable carbon nanotubes to be used in the present invention can be prepared by any method known in the art. They can be prepared by the catalyst decomposition of hydrocarbons, a technique that is called Catalytic Carbon Vapor Deposition (CCVD).

Other methods for preparing carbon nanotubes include the arc-discharge method, the plasma decomposition of hydrocarbons or the pyrolysis of selected polyolefin under selected oxidative conditions. The starting hydrocarbons can be acetylene, ethylene, butane, propane, ethane, methane or any other gaseous or volatile carbon-containing compound. The catalyst, if present, is used in either pure or in supported form. The presence of a support greatly improves the selectivity of the catalysts but it contaminates the carbon nanotubes with support particles, in addition to the soot and amorphous carbon prepared during pyrolysis. Purification can remove these byproducts and impurities. This can be carried out according to the following two steps:

1) the dissolution of the support particles, typically carried out with an appropriate agent that depends upon the nature of the support and
2) the removal of the pyrolytic carbon component, typically based on either oxidation or reduction processes.

Nanotubes can exist as single-walled nanotubes (SWNT) and multi-walled nanotubes (MWNT), i.e. nanotubes having one single wall and nanotubes having more than one wall, respectively. In single-walled nanotubes a one atom thick sheet of atoms, for example a one atom thick sheet of graphite (also called graphene), is rolled seamlessly to form a cylinder. Multi-walled nanotubes consist of a number of such cylinders arranged concentrically. The arrangement in a multi-walled nanotube can be described by the so-called Russian doll model, wherein a larger doll opens to reveal a smaller doll.

In an embodiment, the nanotubes are multi-walled carbon nanotubes, more preferably multi-walled carbon nanotubes having on average from 5 to 15 walls.

Nanotubes, irrespectively of whether they are single-walled or multi-walled, may be characterized by their outer diameter or by their length or by both.

Single-walled nanotubes are preferably characterized by a diameter of at least 0.5 nm, more preferably of at least 1 nm, and most preferably of at least 2 nm. Preferably their diameter is at most 50 nm, more preferably at most 30 nm and most preferably at most 10 nm. Preferably, the length of single-walled nanotubes is at least 0.05 $\mu$m, more preferably at least 0.1 $\mu$m, even more preferably at least 1 $\mu$m. Preferably, their length is at most 50 mm, more preferably at most 25 mm.

Multi-walled nanotubes are preferably characterized by an outer diameter of at least 1 nm, more preferably of at least 2 nm, 4 nm, 6 nm or 8 nm, and most preferably of at least 9 nm. The preferred outer diameter is at most 100 nm, more preferably at most 80 nm, 60 nm or 40 nm, and most preferably at most 20 nm. Most preferably, the outer diameter is in the range from 9 nm to 20 nm. The preferred length of the multi-walled nanotubes is at least 50 nm, more preferably at least 75 nm, and most preferably at least 100 nm. Their preferred length is at most 500 $\mu$m, more preferably at most 100 $\mu$m. The most preferred length is in the range from 100 nm to 10 $\mu$m. In an embodiment, the multi-walled carbon nanotubes have an average outer diameter in the range from 9 nm to 20 nm or an average length in the range from 100 nm to 10 $\mu$m or both.

Preferred carbon nanotubes are carbon nanotubes having a surface area of 200-400 $m^2/g$ (measured by BET method).

Preferred carbon nanotubes are carbon nanotubes having a mean number of 5-15 walls.

Non-limiting examples of commercially available multi-walled carbon nanotubes are Graphistrength™ 100, available from Arkema, Nanocyl™ NC 7000 available from Nanocyl, FloTube™ 9000 available from CNano Technology.

In an embodiment, the composition comprises an antioxidant. Suitable antioxidants include, for example, phenolic antioxidants such as pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), 3DL-alpha-tocopherol, 2,6-di-tert-butyl-4-methylphenol, dibutylhydroxyphenylpropionic acid stearyl ester, 3,5-di-tert-butyl-4-hydroxyhydrocinnamic acid, 2,2'-methylenebis(6-tert-butyl-4-methylphenol), hexamethylene bis[3-(3,5-di-tert-butyl-4-hydroxyphenyl)propionate], benzenepropanamide,N,N'-1,6-hexanediyl bis[3,5-bis(1,1-dimethylethyl)-4-hydroxy] (Antioxidant 1098), Diethyl 3.5-Di-Tert-Butyl-4-Hydroxybenzyl Phosphonate, Calcium bis[monoethyl(3,5-di-tert-butyl-4-hydroxylbenzyl)phosphonate], Triethylene glycol bis(3-tert-butyl-4-hydroxy-5-methylphenyl)propionate (Antioxidant 245), 6,6'-di-tert-butyl-4,4'-butylidenedi-m-cresol, 3,9-bis(2-(3-(3-tert-butyl-4-hydroxy-5-methylphenyl)propionyloxy-1,1-dimethylethyl)-2,4,8,10-tetraoxaspiro[5.5]undecane, 1,3,5-trimethyl-2,4,6-tris(3,5-di-tert-butyl-4-hydroxybenzyl)benzene, 1,1,3-tris(2-methyl-4-hydroxy-5-tert-butylphenyl)butane, (2,4,6-trioxo-1,3,5-triazine-1,3,5(2H,4H,6H)-triyl)triethylene tris[3-(3,5-di-tert-butyl-4-hydroxyphenyl)propionate], tris(3,5-di-tert-butyl-4-hydroxybenzyl) isocyanurate, Tris(4-tert-butyl-3-hydroxy-2,6-dimethylbenzyl) isocyanurate, ethylene bis[3,3-bis(3-tert-butyl-4-hydroxyphenyl)butyrate], and 2,6-bis[[3-(1,1-dimethylethyl)-2-hydroxy-5-methylphenyl] octahydro-4,7-methano-1H-indenyl]-4-methyl-phenol. Suitable antioxidants also include, for example, phenolic antioxidants with dual functionality such 4,4'-Thio-bis(6-tert-butyl-m-methyl phenol) (Antioxidant 300), 2,2'-Sulfanediylbis(6-tert-butyl-4-methylphenol) (Antioxidant 2246-S), 2-Methyl-4,6-bis(octylsulfanylmethyl)phenol, thiodiethylene bis[3-(3,5-di-tert-butyl-4-hydroxyphenyl)propionate], 2,6-di-tert-butyl-4-(4,6-bis(octylthio)-1,3,5-triazin-2-ylamino)phenol, N-(4-hydroxyphenyl)stearamide, bis(1,2,2,6,6-pentamethyl-4-piperidyl) [[3,5-bis(1,1-dimethylethyl)-4-hydroxyphenyl]methyl]butylmalonate, 2,4-di-tert-butylphenyl 3,5-di-tert-butyl-4-hydroxybenzoate, hexadecyl 3,5-di-tert-butyl-4-hydroxybenzoate, 2-(1,1-dimethylethyl)-6-[[3-(1,1-dimethylethyl)-2-hydroxy-5-methylphenyl]methyl]-4-methylphenyl acrylate, and CAS nr. 128961-68-2 (Sumilizer GS). Suitable antioxidants also include, for example, aminic antioxidants such as N-phenyl-2-naphthylamine, poly(1,2-dihydro-2,2,4-trimethyl-quinoline), N-isopropyl-N'-phenyl-p-phenylenediamine, N-Phenyl-1-naphthylamine, CAS nr. 68411-46-1 (Antioxidant 5057), and 4,4-bis(alpha,alpha-dimethylbenzyl)diphenylamine (Antioxidant KY 405). Preferably, the antioxidant is selected from pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), or a mixture thereof.

Process for the preparation of a shaped composite article

The process is remarkable in that the blending of the masterbatch with the second polymer and their shaping to form a shaped composite article is done in a single step and in a single extrusion or injection moulding device. The inventive process allows obtaining enhanced electrical properties on the shaped article compared with processes comprising a first step of compounding the masterbatch with the second polymer to obtain a composition and a subsequent step of shaping the composition to form a shaped article.

Preferably, in step (c) of the present process, the blending is a dry blending of the masterbatch and the second polymer. Preferably, step (c) of the present process is carried out in a twin-screw extruder with a screws rotation speed comprised between 5 to 1000 rpm, preferably between 10 and 750 rpm, more preferably between 15 and 500 rpm, most preferably between 20 and 400 rpm, in particular between 25 and 300 rpm. Twin-screw extruder are preferred to carry out step (c) of the present process since high shear stress is generated which favours the enhancement of the electrical properties.

In a preferred embodiment, the shaped composite article is an extrudate and said extrudate is not chopped into pellets.

In a preferred embodiment, the step (c) of the present process is carried out by sheet extrusion, film extrusion, injection blow moulding, or wherein said shaped composite article is an injection moulded preform, and wherein the process further comprises the step of blow moulding said injection moulded perform.

In a preferred embodiment, the shaped composite article formed at step (c) according to the present process has a surface resistivity, expressed in ohm/sq and determined according to IEC 61340-2-3:2000 on sheets or according to ASTM D257-07, lower than the surface resistivity of a shaped composite article prepared according to a process wherein the article is formed from chopped extruded pellets, preferably with the proviso that the first and second polymers are the same in both processes and that the carbon particles and content thereof in the masterbatch are the same in both processes.

In a preferred embodiment, the shaped composite article prepared according to the present process and obtained in step (c) of the present process has a surface resistivity, expressed in ohm/sq and determined according to IEC 61340-2-3:2000 on sheets or according to ASTM D257-07, lower than the surface resistivity of a shaped composite article prepared according to a process wherein the blending and the shaping of the masterbatch and of the second polymer is not simultaneous, i.e. is sequentially, preferably wherein the blending is carried out in a distinct process step prior to the shaping of the composite article.

In a preferred embodiment, the shaped composite article prepared according to the present process and obtained in step (c) of the present process has a surface resistivity lower than $10^{12}$ ohm/sq, preferably lower than $10^{10}$ ohm/sq, more preferably lower than $10^{7}$ ohm/sq, most preferably lower than $10^{5}$ ohm/sq, in particular lower than $10^{4}$ ohm/sq as determined according to IEC 61340-2-3:2000 on sheets or according to ASTM D257-07. Preferably, the shaped composite article prepared according to the present process has a surface resistivity lower than $10^{7}$ ohm/sq, most preferably lower than $10^{5}$ ohm/sq, in particular lower than $10^{4}$ ohm/sq as determined according to IEC 61340-2-3:2000 on sheets or according to ASTM D257-07, at a carbon nanotubes or graphene content of 1.0 wt% as determined according to ISO 11358.

Preferably, the shaped composite article prepared according to the present process and obtained in step (c) of the present process has an agglomerate area fraction U% lower than 2.5% as determined in accordance with ASTM D2663-14, preferably lower than 2%, more preferably lower than 1.5%, most preferably lower than 1%. The values of the agglomerate area fraction U% of the shaped composite material mentioned herein are preferably obtained by preparing the masterbatch used in the present process as described in the present invention.

In a preferred embodiment, the shaped composite article obtained by the present process and obtained in step (c) of the present process may have a percentage of carbon nanotubes having a length greater than 1500 nm greater than 3%, preferably greater than 5%, more preferably greater than 10%, most preferably greater 15% based on the total amount of carbon nanotubes in said shaped composite article. The electrical properties of the shaped composite article are improved when the percentage of carbon nanotubes having a length greater than 1500 nm is increased.

In a second aspect of the present invention, a shaped composite article is provided. Said shaped composite article is obtained according to the present process. In a preferred embodiment, said shaped composite article has a surface resistivity lower than a comparative composite article prepared according to a process wherein the blending and the shaping of the masterbatch and of the second polymer is not formed from chopped extruded pellets.

In a preferred embodiment, the first polymer is polystyrene, the second polymer is high impact polystyrene and said shaped composite article is a sheet and has a surface resistivity lower than $5.*10^3$ Ohm/sq measured according to IEC 61340-2-3:2000 at a content of carbon nanotubes of $1*0$ wt% based on the total weight of the shaped composite article as determined according to ISO 11358.

In another preferred embodiment, the first polymer is polystyrene and the second polymer is high impact polystyrene; and said shaped composite article is a sheet and has a surface resistivity lower than $3*10^4$ ohm/sq measured according to IEC 61340-2-3:2000 at a carbon nanotubes content of 1.25 wt% based on the total weight of the shaped composite article as determined according to ISO 11358.

In another preferred embodiment, the first polymer is polystyrene and the second polymer is high impact polystyrene, and said shaped composite article is an injection moulded article and has a surface resistivity lower than $5*10^5$ ohm/sq measured according to ASTM D257-07 at a carbon nanotubes content of 2.0 wt% based on the total weight of the shaped composite article as determined according to ISO 11358.

In another preferred embodiment, the first and second polymers are polyethylene, and said shaped composite article is a sheet and has a surface resistivity lower than $6*10^6$ ohm/sq measured according to IEC 61340-2-3:2000 at a carbon nanotubes content of 1.5 wt% based on the total weight of the shaped composite article as determined according to ISO 11358.

In another preferred embodiment, the first and second polymers are polyethylene, and said shaped composite article is a sheet and has a surface resistivity lower than $1.10^6$ ohm/sq measured according to IEC 61340-2-3:2000 at a carbon nanotubes content of 2.0 wt% based on the total weight of the shaped composite article as determined according to ISO 11358.

The melt flow index (MFI) is the weight of polymer melt flowing out from a standard die at a given temperature and with a standard weight applied to the piston, which pushing the sample. The MFI was determined under a load of 2.16 kg at a temperature being equal or greater than the melting temperature of said polymer + 45 °C, based on procedures according to ISO 1133 (under a load of 2.16 kg at a temperature of at least Tm1 + 45 °C wherein Tm1 is the melting temperature of the semi-crystalline polymer). For example, if the polymer is polyethylene, the selected temperature is 190°C. If the polymer is polypropylene, the temperature is 230 °C. If the polymer is polylactic acid, the temperature is 200 °C. The person skilled in the art will select the temperature for determining the MFI of the polymer according to ISO 1133 without any difficulty.

The high load melt flow index (HLMI) was determined under a load of 21.6 kg at a temperature of 190°C for polyethylene, of 230 °C for polypropylene and of 200 °C for polylactic acid according to ISO 1133. The person skilled in the art will select the temperature for determining the HLMI of the polymer according to ISO 1133 without any difficulty.

The molecular weight of the polymer is determined by Gel Permeation Chromatography (GPC). The molecular weight averages used in establishing molecular weight/property relationships are the number average ($M_n$), weight average ($M_w$) and z average ($M_z$) molecular weight. These averages are defined by the following expressions and are determined form the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i W_i} = \frac{\sum_i h_i M_i}{\sum_i h_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight Mi. The third representation in each case (farthest right) defines how one obtains these averages from SEC chromatograms. $h_i$ is the height (from baseline) of the SEC curve at the $i_{th}$ elution fraction and $M_i$ is the molecular weight of species eluting at this increment.

**Examples**

Method for determination of length distributions of carbon nanotubes

The length distributions of carbon nanotubes within the shaped composite article is determined based on the method disclosed in Krause et al., Carbon, 2011, 49, 1243-1247. Parts of the shaped composite article was dissolved in 20 ml of xylene overnight and stirred. A drop of this mixture was placed on Cu grid coated with carbon film. After evaporation of xylene, TEM images of the Cu grid were collected (25 images, 100 kV, 50.000x). The nanotube lengths were measured by applying the software "iTEM" (Olympus) using the measurement function "polygonal line".

Polystyrene (PS) masterbatches

The carbon nanotubes used were multi-walled carbon nanotubes Nanocyl™ NC 7000, commercially available from Nanocyl. These nanotubes had a surface area of 250-300 $m^2/g$ (measured by BET method), a carbon purity of about 90 % by weight (measured by thermal gravimetric analysis), an average diameter of 9.5 nm and an average length of 1.5 $\mu$m (as measured by transmission electron microscopy).

The first amorphous polymer used to prepare the PS masterbatches M1 and M2 were polystyrenes with a melt flow index of 6.5 and 30 g/10mn respectively as measured according to ISO 1133:2005 procedure B condition H (200 °C, 5kg), a density of 1.05 $g/cm^3$ (ISO 1183), a flexural modulus of 2900 MPa (ISO 178), a surface resistivity of more than $10^{14}$ Ohms as measured according to ISO IEC 93. The polystyrene showed a glass transition temperature Tg of 104 °C (i.e.: Tg1).

The masterbatches M1 and M2 were prepared by blending polystyrene and carbon nanotubes, using classical twin-screw extrusion process. Carbon nanotubes powder and polystyrene were introduced into the extruder such as to obtain a CNT content of about 10 % by weight based on the total weight of the blend. The masterbatches were blended on Leitztriz co-rotating twin screw extruder with a ratio length to diameter L/D of 52 (D = 27 nm).

For Masterbatch M1, the polystyrene used to prepare the masterbatch has a melt flow index of 6.5 g/10 min, the barrel temperature was set at 190-210°C, the screw speed was fixed at 250 rpm and the throughput at 14 kg/h. For Masterbatch M2, the polystyrene used to prepare the masterbatch has a melt flow index of 30 g/10 min, the barrel temperature was set at 110-145 °C, to have a melt temperature of 180 °C, the screw speed was fixed at 500 rpm and the throughput at 14 kg/h.

Masterbatch M3 is the commercial Polystyrene-carbon nanotubes masterbatch CNano Technology CP320-07 which contains 7 wt% CNT The melt flow rate of M3 as measured at 200 C/5kg using ASTM D1238 norm was1.5 g/10 min.

The properties of the polystyrene based masterbatches are provided in table 1 below.

*Table 1 - Properties of the PS masterbatches*

| Masterbatch | M1 | M2 | M3 |
|---|---|---|---|
| PS (wt%) | 90 | 90 | - |
| PS MFI (q/10 min) | 6.5 | 30 | - |
| CNT (wt%) | 10 | 10 | 7 |

(continued)

| Masterbatch | M1 | M2 | M3 |
|---|---|---|---|
| Screw speed (RPM) | 250 | 500 | - |
| Throughput (kg/h) | 14 | 14 | - |
| Barrel temperature (°C) | 190-210 | 110-145 | - |
| HLMI (q/10 min | <40 | 6.7 | 52.4 |
| Surface resistance[1], $R_S$ (ohm) | $3.4 \times 10^0$ | $2.2 \times 10^0$ | $1.8 \times 10^2$ |
| Surface resistivity[1], $\rho_S$ (Ohm/sq) | $4.2 \times 10^1$ | $2.8 \times 10^1$ | $2.2 \times 10^3$ |
| *(1) as measured on compression molded plaque from pellets according to ASTM D257-07* | | | |

PE Masterbatches

The carbon nanotubes used were multi-walled carbon nanotubes Nanocyl™ NC 7000, commercially available from Nanocyl. These nanotubes had a surface area of 250-300 $m^2$/g (measured by BET method), a carbon purity of about 90 % by weight (measured by thermal gravimetric analysis), an average diameter of 9.5 nm and an average length of 1.5 $\mu$m (as measured by transmission electron microscopy).

The first semi-crystalline polymer used was polyethylene PE1 with a melt flow index of 16 g/10 min as measured according to ISO 1133:2005 procedure B condition H (190 °C, 2.16kg), a density of 0.935 g/$cm^3$ (ISO 1183) and a Tm of 125 °C (ISO 11357-3:2013).

The masterbatch M4 was prepared by blending polyethylene PE1 and carbon nanotubes, using classical twin-screw extrusion process. Carbon nanotubes powder and polyethylene were introduced into the extruder such as to obtain a CNT content of about 10 % by weight based on the total weight of the blend. The masterbatch M4 was blended on Leitztriz co-rotating twin screw extruder with a L/D of 52 (D=27), the barrel temperature was set at 135-140 °C, to have a melt temperature of about 150 °C.

The properties of the polyethylene based masterbatch is provided in below table 2

*Table 2 - Properties of the PE masterbatch*

| PE Masterbatch | M4 |
|---|---|
| PE1 (wt%) | 90 |
| PE1 MFI (g/10 min) | 16 |
| CNT (wt%) | 10 |
| Screw speed (RPM) | 500 |
| Throughput (kg/h) | 14 |
| Barrel temperature (°C) | 135-140 |
| HLMI (g/10 min.) | 24.3 |
| Surface resistance[1], $R_S$ (ohm) | $8.2 \times 10^0$ |
| Surface resistivity[1], $\rho_S$ Ohm/s | $1.0 \times 10^2$ |
| *(1) as measured on compression molded plaque from pellets according to ASTM D257-07* | |

PS sheets examples S1 to S3: dilution of the PS masterbatches in extrusion prior processing of the article

The masterbatches M1, M2 and M3 are then melt-blended in a second HIPS amorphous using classical twin-screw extrusion process. Both first (masterbatch) and second (HIPS) polymer composition are introduced in the extruder through the main feed. The extrusion is conducted in a Clextral twin-screw extruder with a ratio length to diameter L/D of 35, at a barrel temperature of 220-230 °C and the screw speed is fixed at 175 rpm, at a throughput of 20 kg/h.

The high impact polystyrene (HIPS) selected in accordance to the invention has a melt flow index of 2.8 g/10 min as measured according to ISO 1133:2005 procedure B condition H (200 °C, 5kg), a density of 1.04 g/cm$^3$ (ISO 1183), a flexural modulus of 1600 MPa (ISO 178), a surface resistivity >10$^{13}$ Ohms as measured according to ISO IEC 93. The HIPS shows a glass transition temperature of 100 °C (i.e. Tg2). The molecular weight Mw of the second amorphous polymer is of 225 000 g/mol.

The properties of the polymer compositions are provided in table 3 below.

*Table 3 - Blends*

| Blends | B1 | B2 | B3 |
|---|---|---|---|
| HIPS (wt%) | 90 | 87.5 | 82.1 |
| HIPS MFI (q/10 min) | 2.8 | 2.8 | 2.8 |
| Masterbatch | M1 | M2 | M3 |
| Masterbatch (wt%) | 10 | 12.5 | 17.9 |
| CNT (wt%) | 1.0 | 1.25 | 1.25 |
| Surface resistance[1], $R_S$ (ohm) | 1.1x10$^2$ | 1.0x10$^2$ | 3.9x10$^3$ |
| Surface resistivity[1], $\rho$s (Ohm/sq) | 1.4x10$^3$ | 1.2x10$^3$ | 4.9x10$^4$ |
| *(1) as measured on compression molded plaque from pellets according to ASTM D257-07* | | | |

The compounded B1, B2 and B3 materials were then melt-processed to form sheets (S1, S2 and S3) having a thickness of about 2000 $\mu$m on a Collin sheet extruder type 30x 35D, having a coat-hanger die of 250mm at a barrel temperature of 230 °C, a screw speed of 80 rpm and calender temperature of 65/75/65°C.

The electrical properties of the articles are given in table 4.

PS sheet examples S4 to S7: processing and shaping of the PS masterbatches in the same step and in a single extrusion device

The masterbatches (M1, M2, M3) and the HIPS second amorphous polymer are both introduced in the sheet extruder through the main feed of the sheet extruder to form sheets (S4 to S7) having a thickness of about 2000 $\mu$m on a Collin sheet extruder type 30x 35D, having a coat-hanger die of 250 mm at a barrel temperature of 230 °C, a screw speed of 80 RPM and a calender temperature of 65/75/65 °C.

The high impact polystyrene (HIPS) selected in accordance to the invention has a melt flow index of 2.8 g/10 min as measured according to ISO 1133:2005 procedure B condition H (200 °C, 5kg), a density of 1.04 g/cm$^3$ (ISO 1183), a flexural modulus of 1600 MPa (ISO 178), a surface resistivity>10$^{13}$ Ohms as measured according to ISO IEC 93The melt flow index of the second amorphous polymer is not more than 5 g/10 min. The HIPS shows a glass transition temperature of 100 °C (i.e. Tg2). The molecular weight Mw of the second amorphous polymer is of 225 000 g/mol.

The electrical properties of the articles are given in table 4.

Table 4 - PS Sheets extrusion process conditions

| Sheet | S1 | S2 | S3 | S4 | S5 | S6 | S7 |
|---|---|---|---|---|---|---|---|
| Composition | 100 wt% B1 | 100 wt% B2 | 100 wt% B3 | 10 wt% M1 90 wt% HIPS | 12.5 wt% M2 87.5 wt% HIPS | 17.9 wt% M3 82.1 wt% HIPS | 14.3 wt% M3 85.7 wt% HIPS |
| CNT (wt%) | 1.0 | 1.25 | 1.25 | 1.0 | 1.25 | 1.25 | 1.0 |
| Surface resistance[2] , $R_S$ (ohm) | 3x10$^4$ | 4x10$^6$ | 5x10$^{10}$ | 2x10$^2$ | 1x10$^3$ | 6x10$^9$ | 4x10$^{10}$ |
| Surface resistivity[2], $\rho_S$ (Ohm/sq) | 3x10$^5$ | 4x10$^6$ | 5x10$^{11}$ | 2x10$^3$ | 1x10$^4$ | 6x10$^{10}$ | 4x10$^{11}$ |

(continued)

| Sheet | S1 | S2 | S3 | S4 | S5 | S6 | S7 |
|---|---|---|---|---|---|---|---|
| Proportion of CNT having a length greater than 1500 nm | | 2% | | | 6% | | |
| (2) as measured on extruded sheet according to IEC 61340-2-3:2000 | | | | | | | |

S1, S2 and S3 have been produced in a two-step process (and thus in two different extrusion devices) comprising a first step of melt-compounding and a second step of shaping.
S4, S5, S6 and S7 have been produced according to the invention wherein blending and shaping are carried out in one step, and in a single extrusion device.
As demonstrated by the examples, sheet S4 prepared according to the process of the present invention has enhanced surface resistivity properties compared with sheet S1 prepared according to a comparative process wherein the blending and the shaping of the article is not simultaneous. The surface resistivity drops from $3*10^5$ ohm/sq to $2*10^3$ ohm/sq when the process according to the present invention is used. The same technical effect is observed with sheet S5 compared with sheet S2 and with sheets S6 and S7 compared to sheet S3. It is pointed out that in sheet sample S5 the proportion of CNT having a length greater than 1500 nm is increased compared to sheet sample S2.
The poor electrical properties of S6 and S7 are explained by the use of the starting masterbatch M3.

PE sheets comparative examples S8: dilution of the PE masterbatch in extrusion prior processing of the article

The masterbatch M4 is then diluted in a second semi-crystalline polymer to obtain a polymer composition according to the invention. The second polyethylene (PE2) selected in accordance to the invention has a melt flow index of 6 g/10 min as measured according to ISO 1133:2005 procedure B condition H (190 °C, 2.16kg), a density of $0.934\text{g/cm}^3$ (ISO 1183). The extrusion is conducted in a brabender twin-screw extruder using with a L/D of 40 (D=20) at a barrel temperature of 210 °C and the screw speed is fixed at 80 rpm.
The properties of the polymer compositions are provided in table 5 below.

*Table 5 - Blends*

| Blends | B4 | B5 |
|---|---|---|
| PE2 (wt%) | 85 | 80 |
| PE2 MFI (g/10 min) | 6 | 6 |
| Masterbatch | M4 | M4 |
| Masterbatch (wt%) | 15 | 20 |
| CNT (wt%) | 1.5 | 2.0 |

The compounded B4 and B5 materials were then melt-processed to form sheets (S8 and S9) having a thickness of about 500 $\mu$m on a Collin sheet extruder type 20x 25D, having a fishtail die of 150 mm at a barrel temperature of 240 °C, a screw speed of 50 RPM and calender temperature of 90°C.

PE sheet Inventive examples S9: dilution of the PS masterbatches in extrusion simultaneously while processing of the article

The masterbatch M4 and the second polyethylene (PE2) are both introduced in the sheet extruder through the main feed of the sheet extruder to form sheets (S10 and S11) having a thickness of about 500 $\mu$m on a Collin sheet extruder type 20x 25D, having a fishtail die of 150mm at a barrel temperature of 240 °C, a screw speed of 50 RPM and calender temperature of 90 °C.
The second polyethylene (PE2) selected in accordance to the invention has a melt flow index of 6 g/10 min as measured according to ISO 1133:2005 procedure B condition H (190 °C, 2.16kg), a density of $0.934\text{g/cm}^3$ (ISO 1183).
The electrical properties of the articles are given in table 6.

Table 6 - PE Sheets extrusion process conditions

| Sheet | S8 | S9 | S10 | S11 |
|---|---|---|---|---|
| MC-P (comparative) or DBSP (inventive) | MC-P | MC-P | DBSP | DBSP |
| Composition | 100 wt% B4 | 100 wt% B5 | 15 wt% M4 85 wt% PE2 | 20 wt% M4 80 wt% PE2 |
| CNT (wt%) | 1.5 | 2.0 | 1.5 | 2.0 |
| Surface resistance[2] , $R_S$ (ohm) | $7x10^{10}$ | $2x10^5$ | $5x10^5$ | $9x10^4$ |
| Surface resistivity[2] , $\rho_S$ (Ohm/sq) | $7x10^{11}$ | $2x10^6$ | $5x10^6$ | $9x10^5$ |

*MC-P - comparative means comparative examples comprising melt-compounded and then processed in two different extrusion device*
*DBSP - Inventive means inventive examples according to the present invention wherein blending and shaping are carried out in a single extrusion device*
*(1) as measured on extruded sheet according to IEC 61340-2-3:2000*

As demonstrated by the examples, sheets S10 and S11 prepared according to the process of the present invention have enhanced surface resistivity properties compared with sheets S8 and S9, respectively, prepared according to a comparative process wherein the blending and the shaping of the article is not simultaneous.

PS injection examples I1 and I2

The masterbatch M2 is then melt-blended in a second HIPS amorphous using classical twin-screw extrusion process to form blend B6. Both first (masterbatch) and second (HIPS) polymer composition are introduced in the extruder through the main feed. The extrusion is conducted in a Brabender twin-screw extruder with a ratio length to diameter L/D of 40, at a barrel temperature of 230 °C and the screw speed is fixed at 80 rpm, at a throughput of 2 kg/h.

The high impact polystyrene (HIPS) selected in accordance to the invention has a melt flow index of 2.8 g/10 min as measured according to ISO 1133:2005 procedure B condition H (200 °C, 5kg), a density of 1.04 g/cm³ (ISO 1183), a flexural modulus of 1600 MPa (ISO 178), a surface resistivity $>10^{13}$ Ohms as measured according to ISO IEC 93. The HIPS shows a glass transition temperature of 100 °C (i.e. Tg2). The molecular weight Mw of the second amorphous polymer is of 225 000 g/mol.

The properties of the polymer compositions are provided in table 7 below.

*Table 7 - Blends*

| Blends | B6 |
|---|---|
| HIPS (wt%) | 80 |
| HIPS MFI (q/10 min) | 2.8 |
| Masterbatch | M2 |
| Masterbatch (wt%) | 20 |
| CNT (wt%) | 20 |
| Surface resistance[1], $R_S$ (ohm) | $1.4x10^1$ |
| Surface resistivity[1], $\rho s$ (Ohm/sq) | $1.7x10^2$ |
| *(1) as measured on compression molded plaque from pellets according to ASTM D257-07* | |

The blend B6 is then injected to form 25x25mm square (I1) having a thickness of 1 mm. Injection were done on DR Boy 22A injection press having screw diameter of 18, with a ratio length to diameter L/D of 20 at a barrel temperature of 260 °C, a mold temperature of 30 °C and a screw speed of 25 mm/s. The electrical properties of the articles are given in table 8.

PS injection Inventive examples I2: blending and shaping of the PS masterbatches and HIPS in single injection device

The masterbatch M2 and the HIPS second amorphous polymer are both introduced in the injection press through the main feed to form 25x25mm injected square (12) having a thickness of 1 mm. Injection were done on DR Boy 22A injection press having screw diameter of 18 mm, with a ratio length to diameter L/D of 20 at a barrel temperature of 260°C, a mold temperature of 30 °C and a screw speed of 25 mm/s. The electrical properties of the articles are given in table 7.

The high impact polystyrene (HIPS) selected in accordance to the invention has a melt flow index of 2.8 g/10 min as measured according to ISO 1133:2005 procedure B condition H (200 °C, 5kg), a density of 1.04 g/cm$^3$ (ISO 1183), a flexural modulus of 1600 MPa (ISO 178), a surface resistivity>10$^{13}$ Ohms as measured according to ISO IEC 93. The melt flow index of the second amorphous polymer is not more that 5 g/10 min. The HIPS shows a glass transition temperature of 100 °C (i.e. Tg2). The molecular weight Mw of the second amorphous polymer is of 225 000 g/mol.

Table 8 - PS injected articles

| Sheet | I1 | I2 |
|---|---|---|
| MC-P (comparative) or DBSP (Inventive) | MC-P | DBSP |
| Composition | 100 wt% B6 | 20 wt% M2<br>80 wt% HIPS |
| CNT (wt%) | 2.0 | 2.0 |
| Surface resistance(2), $R_S$ (ohm) | $2 \times 10^5$ | $3 \times 10^4$ |
| Surface resistivity(2) , $\rho_S$ (Ohm/sq) | $2 \times 10^6$ | $3 \times 10^5$ |
| *(1) as measured on compression molded plaque from pellets according to ASTM D257-07* | | |

As demonstrated by the examples, I2 prepared according to the process of the present invention has enhanced surface resistivity properties compared with I1 prepared according to a comparative process wherein the blending and the shaping of the article is not simultaneous, i.e not in single device.

**Claims**

1. Process for the preparation of a shaped composite article comprising a polymer composition and carbon particles being carbon nanotubes or graphene, said polymer composition comprising a mixture of a first polymer and a second polymer, and the composite article comprises from 0.01 to 4% by weight of carbon particles based on the total weight of the composite article as determined according to ISO 11358, **characterized in that** said process comprises the steps of:

   (a) providing a masterbatch comprising the first polymer and at least 5% of carbon particles by weight of the masterbatch as determined according to ISO 11358,
   (b) providing the second polymer, and
   (c) blending and shaping, in the same step, the masterbatch and the second polymer in a single extrusion or injection moulding device to form said shaped composite article.

2. Process according to claim 1 wherein the shaped composite article is an extrudate and said extrudate is not chopped into pellets.

3. Process according to claim 2, wherein the shaped composite article is a film, sheet, wire, fibre bundle or profile.

4. Process according to any one of claim 1 to 3, wherein the masterbatch has a surface resistivity of less than 10$^3$ Ohm/sq as measured on compression molded plaque from pellets according to ASTM D257-07.

5. Process according to any one of the previous claims wherein the first and second polymers are either:

   • amorphous polymers independently selected from the group consisting polystyrene, acrylonitrile-butadiene-

styrene, polycarbonate, styrene acrylonitrile, poly(methylmethacrylate), polyvinylchloride, polybutadiene, polybutylene terephthalate, poly(p-phenyleneoxide), polysulfone, polyethersulfone, polyethylenimine, polyphenylsulfone, acrylonitrile styrene acrylate or any combination thereof; with preference at least one of the first or second amorphous polymer is polystyrene, said polystyrene being selected from polystyrene, modified polystyrene, or combination of polystyrene and modified polystyrene, or

• semi-crystalline polymers independently selected from the group consisting of polyethylene, syndiotactic or isotactic polypropylene, polylactic acid, polyamide, ethyl-vinyl acetate homopolymer or copolymer, polyurethane, copolymer of ethylene with $C_3$-$C_{10}$ olefins, copolymer of propylene with ethylene or $C_4$-$C_{10}$ olefins, impact copolymer of propylene, polyetheretherketone, polyoxymethylene, syndiotactic polystyrene (SPS), polyphenylene sulfide (PPS), liquid crystalline polymer (LCP), homo- and copolymer of butene, homo- and copolymer of hexene; preferably the first and second semi-crystalline polymer are independently selected from polyethylene, syndiotactic or isotactic polypropylene, polylactic acid, copolymer of ethylene with $C_3$-$C_{10}$ olefins, copolymer of propylene with ethylene or $C_4$-$C_{10}$ olefins, impact copolymer of propylene .

6. Process according to claim 5, wherein the first and second polymers are amorphous, and wherein the masterbatch comprises a blend of the first polymer with at least 5% by weight of carbon nanotubes or graphene based on the total weight of the masterbatch as determined according to ISO 11358, said masterbatch having a high load melt flow index HLMI of less than 40 g/10 min determined at 200°C under a load of 21.6 kg according to ISO1133, preferably the masterbatch comprises a blend of the first polymer with from 5 % to 25 %, more preferably from 5% to 15% by weight of carbon nanotubes or graphene based on the total weight of the masterbatch as determined according to ISO 11358.

7. Process according to claim 5, wherein the first and second polymers are semi-crystalline and wherein the masterbatch comprises a blend of the first polymer with at least 5 wt% of carbon nanotubes or graphene based on the total weight of the masterbatch as determined according to ISO 11358, said masterbatch having a high load melt flow index HLMI of from 2 to 1000 g/10min, preferably ranging from 10 to 1000 g/10min as determined under a load of 21.6 kg according to ISO1133, preferably the masterbatch comprises a blend of the first polymer with from 5 % to 25 %, more preferably from 5% to 15% by weight of carbon nanotubes or graphene based on the total weight of the masterbatch as determined according to ISO 11358..

8. Process according to anyone of the previous claims wherein the melt flow index of the first polymer is higher than the one of the second polymer, preferably the melt flow index of the first polymer is at least twice of the one of the second polymer.

9. Process according to anyone of the previous claims wherein the shaped composite article formed at step (c) has:

- a surface resistivity, determined according to IEC 61340-2-3:2000 on sheets or determined according to ASTM D-257-07 on compression molded plaques, lower than 107 Ohm/sq, and/or
- an agglomerate area fraction U% lower than 2.5% as determined in accordance with ASTM D-2663-14, and/or
- a percentage of carbon nanotubes having a length greater than 1500 nm greater than 3% based on the total amount of carbon nanotubes in said shaped composite article.

10. Process according to anyone of the previous claims, wherein the composite article is a blow-moulded container obtained either,

• by injection blow moulding the container in step (c), or
• by forming a preform in step (c), followed by a separate step of blow-moulding said preform to form the container.

11. Process according to anyone of the previous claims, wherein the first polymer is semi-crystalline, with a melting temperature, Tm1, measured according to ISO11357-3; and wherein the masterbatch is produced by blending said first polymer with at least 5% of carbon particles in an extruder comprising a transport zone and a melting zone maintained at a temperature comprised between Tm1 + 1°C and Tm1 + 50°C, preferably between Tm1 + 5°C and Tm1 + 30°C.

12. Process according to anyone of claims 1 to 6 and 8 to 11, wherein the first and second polymers are amorphous; and the masterbatch and the second amorphous polymer are blended and shaped together by extrusion in an extruder at a barrel temperature ranging from Tg2+100°C to Tg2+200°C, wherein Tg2 is the glass transition temperature of the second polymer; preferably the masterbatch and the second amorphous polymer are blended and shaped together by extrusion in an extruder at a barrel temperature ranging from Tg2+120°C to Tg2+180°C.

13. Process according to anyone of the previous claims, wherein step (c) is carried out in a twin-screw extruder with a screws rotation speed comprised between 25 and 300 rpm.

14. A shaped composite article obtained by the process according to anyone of the previous claims 1 to 13, wherein the masterbatch has a surface resistivity of less than $10^3$ Ohm/sq as measured on compression molded plaque from pellets according to ASTM D257-07, and further wherein the first polymer is polystyrene, the second polymer is high impact polystyrene and said article is a sheet and has a surface resistivity lower than $5.10^3$ Ohm/sq measured according to IEC61340-2-3:2000 and a content of carbon nanotubes of 1.0 wt% based on the total weight of the shaped composite article as determined according to ISO 11358.

15. A shaped composite article obtained by the process according to anyone of the previous claims 1 to 13, wherein the masterbatch has a surface resistivity of less than $10^3$ Ohm/sq as measured on compression molded plaque from pellets according to ASTM D257-07, and further wherein the first polymer is polystyrene and the second polymer is high impact polystyrene and said article is a sheet and has a surface resistivity lower than $3.10^4$ ohm/sq measured according to IEC61340-2-3:2000 and a carbon nanotubes content of 1.25 wt% based on the total weight of the shaped composite article as determined according to ISO 11358.

16. A shaped composite article obtained by the process according to anyone of the previous claims 1 to 13, wherein the masterbatch has a surface resistivity of less than $10^3$ Ohm/sq as measured on compression molded plaque from pellets according to ASTM D257-07, and further wherein the first polymer is polystyrene and the second polymer is high impact polystyrene and said article is an injection moulded article and has a surface resistivity lower than $5.10^5$ ohm/sq measured according to ASTM D-257-07 and a carbon nanotubes content of 2.0 wt% based on the total weight of the shaped composite article as determined according to ISO 11358.

17. A shaped composite article obtained by the process according to anyone of the previous claims 1 to 13, wherein the masterbatch has a surface resistivity of less than $10^3$ Ohm/sq as measured on compression molded plaque from pellets according to ASTM D257-07, and further wherein the first and second polymers are polyethylene, and said article is a sheet and has a surface resistivity lower than $6.10^6$ ohm/sq measured according to IEC61340-2-3:2000 and a carbon nanotubes content of 1.5 wt% based on the total weight of the shaped composite article as determined according to ISO11358.

18. A shaped composite article obtained by the process according to anyone of the previous claims 1 to 13, wherein the masterbatch has a surface resistivity of less than $10^3$ Ohm/sq as measured on compression molded plaque from pellets according to ASTM D257-07, and further wherein the first and second polymers are polyethylene, and said article is a sheet and has a surface resistivity lower than $1.10^6$ ohm/sq measured according to IEC1340-2-3:2000 and a carbon nanotubes content of 2.0 wt% based on the total weight of the shaped composite article as determined according to ISO 11358.

**Patentansprüche**

1. Verfahren zur Herstellung eines geformten Verbundartikels, umfassend eine Polymerzusammensetzung und Kohlenstoffpartikel, die Kohlenstoffnanoröhrchen oder Graphen sind, wobei die Polymerzusammensetzung eine Mischung aus einem ersten Polymer und einem zweiten Polymer umfasst, und der Verbundartikel 0,01 bis 4 Gew.-% Kohlenstoffpartikel, bezogen auf das Gesamtgewicht des Verbundartikels, bestimmt gemäß ISO 11358, umfasst, **dadurch gekennzeichnet, dass** das Verfahren die Schritte umfasst:

(a) Bereitstellen einer Vormischung, umfassend das erste Polymer und mindestens 5 % Kohlenstoffpartikel, bezogen auf das Gewicht der Vormischung, bestimmt gemäß ISO 11358,
(b) Bereitstellen des zweiten Polymers, und
(c) Vermischen und Formen der Vormischung und des zweiten Polymers in demselben Schritt in einer einzigen Extrusions- oder Spritzgießvorrichtung, um den geformten Verbundartikel zu bilden.

2. Verfahren nach Anspruch 1, wobei der geformte Verbundartikel ein Extrudat ist und das Extrudat nicht zu Pellets zerkleinert wird.

3. Verfahren nach Anspruch 2, wobei der geformte Verbundartikel ein Film, eine Folie, ein Draht, ein Faserbündel oder ein Profil ist.

4. Verfahren nach einem der Ansprüche 1 bis 3, wobei die Vormischung einen spezifischen Oberflächenwiderstand von weniger als $10^3$ Ohm/Quadrat aufweist, gemessen an einer formgepressten Platte aus Pellets gemäß ASTM D257-07.

5. Verfahren nach einem der vorhergehenden Ansprüche, bei dem das erste und das zweite Polymer entweder sind:

   • amorphe Polymere, unabhängig ausgewählt aus der Gruppe bestehend aus Polystyrol, Acrylnitril-Butadien-Styrol, Polycarbonat, Styrol-Acrylnitril, Poly(methylmethacrylat), Polyvinylchlorid, Polybutadien, Polybutylenterephthalat, Poly(p-phenylenoxid), Polysulfon, Polyethersulfon, Polyethylenimin, Polyphenylsulfon, Acrylnitril-Styrol-Acrylat oder eine beliebige Kombination davon; wobei mindestens eines des ersten oder zweiten amorphen Polymers vorzugsweise Polystyrol ist, wobei das Polystyrol ausgewählt ist aus Polystyrol, modifiziertem Polystyrol oder einer Kombination von Polystyrol und modifiziertem Polystyrol, oder
   • semikristalline Polymere, die unabhängig ausgewählt sind aus der Gruppe bestehend aus Polyethylen, syndiotaktischem oder isotaktischem Polypropylen, Polymilchsäure, Polyamid, Ethyl-Vinylacetat-Homopolymer oder -Copolymer, Polyurethan, Copolymer von Ethylen mit $C_3$-$C_{10}$-Olefinen, Copolymer von Propylen mit Ethylen oder $C_4$-$C_{10}$-Olefinen, schlagzähes Copolymer von Propylen, Polyetheretherketon, Polyoxymethylen, syndiotaktischem Polystyrol (SPS), Polyphenylensulfid (PPS), flüssigkristallinem Polymer (LCP), Homo- und Copolymer von Buten, Homo- und Copolymer von Hexen; wobei das erste und das zweite semikristalline Polymer vorzugsweise unabhängig ausgewählt sind aus Polyethylen, syndiotaktischem oder isotaktischem Polypropylen, Polymilchsäure, Copolymer von Ethylen mit $C_3$-$C_{10}$-Olefinen, Copolymer von Propylen mit Ethylen oder $C_4$-$C_{10}$-Olefinen, schlagzähem Copolymer von Propylen.

6. Verfahren nach Anspruch 5, wobei das erste und das zweite Polymer amorph sind und wobei die Vormischung eine Mischung des ersten Polymers mit mindestens 5 Gew.-% Kohlenstoffnanoröhrchen oder Graphen umfasst, bezogen auf das Gesamtgewicht der Vormischung, gemäß ISO 11358 bestimmt, wobei die Vormischung einen Hochlastschmelzindex HLMI von weniger als 40 g/10 min aufweist, bestimmt bei 200 °C unter einer Last von 21,6 kg gemäß ISO1133, wobei die Vormischung vorzugsweise eine Mischung des ersten Polymers mit 5 bis 25 Gew.-%, besonders bevorzugt 5 bis 15 Gew.-% Kohlenstoffnanoröhrchen oder Graphen umfasst, bezogen auf das Gesamtgewicht der Vormischung, gemäß ISO 11358 bestimmt.

7. Verfahren nach Anspruch 5, wobei das erste und das zweite Polymer semikristallin sind und wobei die Vormischung eine Mischung des ersten Polymers mit mindestens 5 Gew.-% Kohlenstoffnanoröhrchen oder Graphen umfasst, bezogen auf das Gesamtgewicht der Vormischung, gemäß ISO 11358 bestimmt, wobei die Vormischung einen Hochlastschmelzindex HLMI von 2 bis 1000 g/10 min, vorzugsweise im Bereich von 10 bis 1000 g/10 min, bestimmt unter einer Last von 21,6 kg gemäß ISO 1133, aufweist, wobei die Vormischung vorzugsweise eine Mischung des ersten Polymers mit 5 bis 25 Gew.-%, besonders bevorzugt 5 bis 15 Gew.-% Kohlenstoffnanoröhrchen oder Graphen umfasst, bezogen auf das Gesamtgewicht der Vormischung, bestimmt gemäß ISO 11358.

8. Verfahren nach einem der vorhergehenden Ansprüche, wobei der Schmelzindex des ersten Polymers höher ist als der des zweiten Polymers, wobei der Schmelzindex des ersten Polymers vorzugsweise mindestens das Doppelte desjenigen des zweiten Polymers ist.

9. Verfahren nach einem der vorhergehenden Ansprüche, wobei der in Schritt (c) gebildete geformte Verbundartikel aufweist:

   - einen Oberflächenwiderstand, bestimmt gemäß IEC 61340-2-3: 2000 an Folien oder bestimmt gemäß ASTM D-257-07 an formgepressten Platten, kleiner als $10^7$ Ohm/Quadrat und/oder
   - einen agglomerierten Flächenanteil U% niedriger als 2,5 %, bestimmt gemäß ASTM D-2663-14, und/oder
   - einen Prozentanteil von Kohlenstoffnanoröhrchen mit einer Länge von mehr als 1500 nm von mehr als 3%, bezogen auf die Gesamtmenge an Kohlenstoffnanoröhrchen in dem geformten Verbundartikel.

10. Verfahren nach einem der vorhergehenden Ansprüche, wobei der Verbundartikel ein blasgeformter Behälter ist, der entweder erhalten wird

   • durch Spritzblasformen des Behälters in Schritt (c), oder

• durch Bilden eines Vorformlings in Schritt (c), gefolgt von einem getrennten Schritt des Blasformens des Vorformlings, um den Behälter zu bilden.

11. Verfahren nach einem der vorhergehenden Ansprüche, wobei das erste Polymer semikristallin ist mit einer Schmelztemperatur, Tm1, gemessen gemäß ISO11357-3; und wobei die Vormischung durch Vermischen des ersten Polymers mit mindestens 5 % Kohlenstoffpartikeln in einem Extruder hergestellt wird, der eine Transportzone und eine Schmelzzone umfasst, die bei einer Temperatur zwischen Tm1 + 1 °C und Tm1 + 50 °C, vorzugsweise zwischen Tm1 + 5 °C und Tm1 + 30 °C gehalten wird.

12. Verfahren nach einem der Ansprüche 1 bis 6 und 8 bis 11, wobei das erste und das zweite Polymer amorph sind; und die Vormischung und das zweite amorphe Polymer durch Extrusion in einem Extruder bei einer Zylindertemperatur im Bereich von Tg2 + 100 °C bis Tg2 + 200 °C miteinander vermischt und geformt werden, wobei Tg2 die Glasübergangstemperatur des zweiten Polymers ist; vorzugsweise werden die Vormischung und das zweite amorphe Polymer durch Extrusion in einem Extruder bei einer Zylindertemperatur im Bereich von Tg2 + 120 °C bis Tg2 + 180 °C miteinander vermischt und geformt.

13. Verfahren nach einem der vorhergehenden Ansprüche, wobei Schritt (c) in einem Doppelschneckenextruder mit einer Schneckendrehzahl zwischen 25 und 300 U/min durchgeführt wird.

14. Geformter Verbundartikel, der durch das Verfahren nach einem der vorhergehenden Ansprüche 1 bis 13 erhalten wird, wobei die Vormischung einen Oberflächenwiderstand von weniger als $10^3$ Ohm/Quadrat aufweist, gemessen an einer formgepressten Platte aus Pellets gemäß ASTM D257-07, und ferner wobei das erste Polymer Polystyrol ist, das zweite Polymer hochschlagzähes Polystyrol ist und der Artikel eine Folie ist und einen Oberflächenwiderstand von weniger als $5,10^3$ Ohm/Quadrat, gemessen gemäß IEC 61340-2-3: 2000, und einen Gehalt an Kohlenstoffnanoröhrchen von 1,0 Gew.-%, bezogen auf das Gesamtgewicht des geformten Verbundartikels, bestimmt gemäß ISO 11358, aufweist.

15. Geformter Verbundartikel, der durch das Verfahren nach einem der vorhergehenden Ansprüche 1 bis 13 erhalten wird, wobei die Vormischung einen Oberflächenwiderstand von weniger als $10^3$ Ohm/Quadrat aufweist, gemessen an einer formgepressten Platte aus Pellets gemäß ASTM D257-07, und ferner wobei das erste Polymer Polystyrol ist und das zweite Polymer hochschlagzähes Polystyrol ist und der Artikel eine Folie ist und einen Oberflächenwiderstand von weniger als $3,10^4$ Ohm/Quadrat, gemessen gemäß IEC 61340-2-3: 2000, und einen Kohlenstoffnanoröhrchengehalt von 1,25 Gew.-%, bezogen auf das Gesamtgewicht des geformten Verbundartikels, bestimmt gemäß ISO 11358, aufweist.

16. Geformter Verbundartikel, der durch das Verfahren nach einem der vorhergehenden Ansprüche 1 bis 13 erhalten wird, wobei die Vormischung einen Oberflächenwiderstand von weniger als $10^3$ Ohm/Quadrat aufweist, gemessen an einer formgepressten Platte aus Pellets gemäß ASTM D257-07, und ferner wobei das erste Polymer Polystyrol ist und das zweite Polymer hochschlagzähes Polystyrol ist und der Artikel ein spritzgegossener Artikel ist und einen Oberflächenwiderstand von weniger als $5,10^5$ Ohm/Quadrat, gemessen gemäß ASTM D-257-07, und einen Kohlenstoffnanoröhrchengehalt von 2,0 Gew.-%, bezogen auf das Gesamtgewicht des geformten Verbundartikels, bestimmt gemäß ISO 11358, aufweist.

17. Geformter Verbundartikel, der durch das Verfahren nach einem der vorhergehenden Ansprüche 1 bis 13 erhalten wird, wobei die Vormischung einen Oberflächenwiderstand von weniger als $10^3$ Ohm/Quadrat aufweist, gemessen an einer formgepressten Platte aus Pellets gemäß ASTM D257-07, und ferner wobei das erste und das zweite Polymer Polyethylen ist und der Artikel eine Folie ist und einen Oberflächenwiderstand von weniger als $6,10^6$ Ohm/Quadrat, gemessen gemäß IEC 61340-2-3: 2000, und einen Kohlenstoffnanoröhrchengehalt von 1,5 Gew.-%, bezogen auf das Gesamtgewicht des geformten Verbundartikels, bestimmt gemäß ISO 11358, aufweist.

18. Geformter Verbundartikel, der durch das Verfahren nach einem der vorhergehenden Ansprüche 1 bis 13 erhalten wird, wobei die Vormischung einen Oberflächenwiderstand von weniger als $10^3$ Ohm/Quadrat aufweist, gemessen an einer formgepressten Platte aus Pellets gemäß ASTM D257-07, und ferner wobei das erste und das zweite Polymer Polyethylen ist und der Artikel eine Folie ist und einen Oberflächenwiderstand von weniger als $1,10^6$ Ohm/Quadrat, gemessen gemäß IEC 1340-2-3: 2000, und einen Kohlenstoffnanoröhrchengehalt von 2,0 Gew.-%, bezogen auf das Gesamtgewicht des geformten Verbundartikels, bestimmt gemäß ISO 11358, aufweist.

**Revendications**

1. Procédé pour la préparation d'un article composite façonné comprenant une composition polymère et des particules de carbone qui sont des nanotubes de carbone ou du graphène, ladite composition polymère comprenant un mélange d'un premier polymère et d'un second polymère, et l'article composite comprend de 0,01 à 4 % en poids de particules de carbone en fonction du poids total de l'article composite comme déterminé selon la norme ISO 11358, **caractérisé en ce que** ledit procédé comprend les étapes consistant à :

> (a) fournir un mélange maître comprenant le premier polymère et au moins 5 % de particules de carbone en poids du mélange maître comme déterminé selon la norme ISO 11358,
> (b) fournir le second polymère, et
> (c) mélanger et façonner, dans la même étape, le mélange maître et le second polymère dans un unique dispositif de moulage par extrusion ou injection pour former ledit article composite façonné.

2. Procédé selon la revendication 1, dans lequel l'article composite façonné est un extrudat et ledit extrudat n'est pas coupé en granulés.

3. Procédé selon la revendication 2, dans lequel l'article composite façonné est un film, une feuille, un fil, un faisceau de fibres ou un profilé.

4. Procédé selon l'une quelconque des revendications 1 à 3, dans lequel le mélange maître a une résistivité superficielle inférieure à $10^3$ Ohm/carré comme mesuré sur une plaque moulée par compression à partir de granulés selon la norme ASTM D257-07.

5. Procédé selon l'une quelconque des revendications précédentes, dans lequel les premier et second polymères sont soit :

> • des polymères amorphes choisis indépendamment dans le groupe constitué par un polystyrène, un acrylonitrile-butadiène-styrène, un polycarbonate, un styrène-acrylonitrile, un poly(méthacrylate de méthyle), un polychlorure de vinyle, un polybutadiène, un téréphtalate de polybutylène, un poly(oxyde de p-phénylène), une polysulfone, une polyéthersulfone, une olyéthylènimine, une polyphénylsulfone, un acrylonitrile-styrène-acrylate ou n'importe quelle combinaison de ceux-ci ; de préférence au moins l'un du premier ou du second polymère amorphe est un polystyrène, ledit polystyrène étant choisi parmi un polystyrène, un polystyrène modifié ou une combinaison de polystyrène et de polystyrène modifié, ou
> • des polymères semi-cristallins choisis indépendamment dans le groupe constitué par un polyéthylène, un polypropylène syndiotactique ou isotactique, un acide polylactique, un polyamide, un homopolymère ou copolymère d'acétate de vinyle-éthyle, un polyuréthane, un copolymère d'éthylène avec des oléfines en $C_3$ à $C_{10}$, un copolymère de propylène avec de l'éthylène ou des oléfines en $C_4$ à $C_{10}$, un copolymère de propylène résistant aux chocs, une polyétheréthercétone, un polyoxyméthylène, un polystyrène syndiotactique (SPS), un sulfure de polyphénylène (PPS), un polymère cristallin liquide (LCP), un homo- et un copolymère de butène, un homo- et un copolymère d'hexène ; de préférence le premier et le second polymère semi-cristallin sont choisis indépendamment parmi un polyéthylène, un polypropylène syndiotactique ou isotactique, un acide polylactique, un copolymère d'éthylène avec des oléfines en $C_3$ à $C_{10}$, un copolymère de propylène avec de l'éthylène ou des oléfines en $C_4$ à $C_{10}$, un copolymère de propylène résistant aux chocs.

6. Procédé selon la revendication 5, dans lequel les premier et second polymères sont amorphes et dans lequel le mélange maître comprend un mélange du premier polymère avec au moins 5 % en poids de nanotubes de carbone ou de graphène par rapport au poids total du mélange maître comme déterminé selon la norme ISO 11358, ledit mélange maître ayant un indice de fluidité à chaud sous forte charge HLMI inférieur à 40 g/10 min déterminé à 200 °C sous une charge de 21,6 kg selon la norme ISO 1133, de préférence le mélange maître comprend un mélange du premier polymère avec de 5 % à 25 %, plus préférablement de 5 % à 15% en poids de nanotubes de carbone ou de graphène par rapport au poids total du mélange maître comme déterminé selon la norme ISO 11358.

7. Procédé selon la revendication 5, dans lequel les premier et second polymères sont semi-cristallins et dans lequel le mélange maître comprend un mélange du premier polymère avec au moins 5 % en poids de nanotubes de carbone ou de graphène par rapport au poids total du mélange maître comme déterminé selon la norme ISO 11358, ledit mélange maître ayant un indice de fluidité à chaud sous forte charge HLMI de 2 à 1 000 g/10 min, de préférence allant de 10 à 1 000 g/10 min comme déterminé sous une charge de 21,6 kg selon la norme ISO 1133, de préférence le mélange maître comprend un mélange du premier polymère avec de 5 % à 25 %, plus préférablement de 5 % à 15 % en poids de nanotubes de carbone ou de graphène par rapport au poids total du mélange maître comme déterminé selon la norme ISO 11358.

8. Procédé selon l'une quelconque des revendications précédentes, dans lequel l'indice de fluidité à chaud du premier polymère est supérieur à celui du second polymère, de préférence l'indice de fluidité du premier polymère est au moins deux fois celui du second polymère.

9. Procédé selon l'une quelconque des revendications précédentes, dans lequel l'article composite façonné formé à l'étape (c) a :

   - une résistivité superficielle, déterminée selon la norme IEC61340-2-3:2000 sur des feuilles ou déterminée selon la norme ASTM D-257-07 sur des plaques moulées par compression, inférieure à $10^7$ Ohm/carré et/ou
   - une fraction de surface d'agglomérat U% inférieure à 2,5 % comme déterminé selon la norme ASTM D-2663-14, et/ou
   - un pourcentage de nanotubes de carbone ayant une longueur supérieure à 1 500 nm supérieur à 3 % par rapport à la quantité totale de nanotubes de carbone dans ledit article composite façonné.

10. Procédé selon l'une quelconque des revendications précédentes, dans lequel l'article composite est un récipient moulé par soufflage obtenu soit

   • par moulage par injection-soufflage du récipient à l'étape (c), ou
   • par formation d'une préforme à l'étape (c), suivie d'une étape distincte de moulage par soufflage de ladite préforme pour former le récipient.

11. Procédé selon l'une quelconque des revendications précédentes, dans lequel le premier polymère est semi-cristallin, avec une température de fusion, Tm1, mesurée selon la norme ISO 11357-3 ; et dans lequel le mélange maître est produit en mélangeant ledit premier polymère avec au moins 5 % de particules de carbone dans une extrudeuse comprenant une zone de transport et une zone de fusion maintenue à une température comprise entre Tm1 + 1 °C et Tm1 + 50 °C, de préférence entre Tm1 + 5 °C et Tm1 + 30 °C.

12. Procédé selon l'une quelconque des revendications 1 à 6 et 8 à 11, dans lequel les premier et second polymères sont amorphes ; et le mélange maître et le second polymère amorphe sont mélangés et façonnés ensemble par extrusion dans une extrudeuse à une température de cylindre allant de Tg2 + 100 °C à Tg2 + 200 °C, où Tg2 est la température de transition vitreuse du second polymère ; de préférence le mélange maître et le second polymère amorphe sont mélangés et façonnés ensemble par extrusion dans une extrudeuse à une température de cylindre allant de Tg2 + 120 °C à Tg2 + 180 °C.

13. Procédé selon l'une quelconque des revendications précédentes, dans lequel l'étape (c) est réalisée dans une extrudeuse à deux vis avec une vitesse de rotation des vis comprise entre 25 et 300 tr/min.

14. Article composite façonné obtenu par le procédé selon l'une quelconque des revendications précédentes 1 à 13, dans lequel le mélange maître a une résistivité superficielle inférieure à $10^3$ Ohm/carré comme mesuré sur une plaque moulée par compression à partir de granulés selon la norme ASTM D257-07, et en outre dans lequel le premier polymère est un polystyrène, le second polymère est un polystyrène à haute résistance aux chocs et ledit article est une feuille et présente une résistivité superficielle inférieure à $5.10^3$ Ohm/carré mesurée selon la norme IEC61340-2-3:2000 et une teneur en nanotubes de carbone de 1,0 % en poids par rapport au poids total de l'article composite façonné comme déterminé selon la norme ISO 11358.

15. Article composite façonné obtenu par le procédé selon l'une quelconque des revendications précédentes 1 à 13, dans lequel le mélange maître a une résistivité superficielle inférieure à $10^3$ Ohm/carré comme mesuré sur une plaque moulée par compression à partir de granulés selon la norme ASTM D257-07, et en outre dans lequel le premier polymère est un polystyrène et le second polymère est un polystyrène à haute résistance aux chocs et ledit article est une feuille et présente une résistivité superficielle inférieure à $3.10^4$ Ohm/carré mesurée selon la norme IEC61340-2-3:2000 et une teneur en nanotubes de carbone de 1,25% en poids par rapport au poids total de l'article composite façonné comme déterminé selon la norme ISO 11358.

16. Article composite façonné obtenu par le procédé selon l'une quelconque des revendications précédentes 1 à 13, dans lequel le mélange maître a une résistivité superficielle inférieure à $10^3$ Ohm/carré comme mesuré sur une plaque moulée par compression à partir de granulés selon la norme ASTM D257-07, et en outre dans lequel le premier polymère est un polystyrène et le second polymère est un polystyrène à haute résistance aux chocs et ledit article est un article moulé par injection et présente une résistivité superficielle inférieure à $5.10^5$ Ohms/carré selon la norme ASTM D-257-07 et une teneur en nanotubes de carbone de 2,0 % en poids par rapport au poids total de l'article composite façonné comme déterminé selon la norme ISO 11358.

17. Article composite façonné obtenu par le procédé selon l'une quelconque des revendications précédentes 1 à 13, dans lequel le mélange maître a une résistivité superficielle inférieure à $10^3$ Ohm/carré comme mesuré sur une plaque moulée par compression à partir de granulés selon la norme ASTM D257-07, et en outre dans lequel les premier et second polymères sont un polyéthylène et ledit article est une feuille et présente une résistivité superficielle inférieure à $6.10^6$ Ohms/carré mesurée selon la norme IEC61340-2-3:2000 et une teneur en nanotubes de carbone de 1,5 % en poids par rapport au poids total de l'article composite façonné comme déterminé selon la norme ISO 11358.

18. Article composite façonné obtenu par le procédé selon l'une quelconque des revendications précédentes 1 à 13, dans lequel le mélange maître a une résistivité superficielle inférieure à $10^3$ Ohm/carré comme mesuré sur une plaque moulée par compression à partir de granulés selon la norme ASTM D257-07, et en outre dans lequel les premier et second polymères sont un polyéthylène et ledit article est une feuille et présente une résistivité superficielle inférieure à $1.10^6$ Ohms/carré mesurée selon la norme IEC1340-2-3:2000 et une teneur en nanotubes de carbone de 2,0 % en poids par rapport à poids total de l'article composite façonné déterminé selon la norme ISO 11358.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015014897 A
- KR 20090095766
- EP 2028218 A
- WO 2013107535 A
- EP 2401311 A
- US 20120289656 A
- US 2010240832 A

**Non-patent literature cited in the description**

- *CHEMICAL ABSTRACTS,* 128961-68-2
- *CHEMICAL ABSTRACTS,* 68411-46-1
- **KRAUSE et al.** *Carbon,* 2011, vol. 49, 1243-1247